# EUROPEAN PATENT APPLICATION

(11) **EP 4 753 224 A1**
(43) Date of publication of application: **03.06.2026**
(21) Application number: 25219061.6
(22) Date of filing: 27.11.2025
(51) Int. Cl.: H04L 41/12, H04L 41/14, H04L 41/147, H04L 41/16, H04L 41/0654

(54) **UNSUPERVISED NETWORK ANOMALY DETECTION**

(30) Priority: 27.11.2024 US 202418963139
(71) Applicant: Nvidia Corporation, Santa Clara, CA 95051 (US)
(72) Inventor: ZOHAR, Guy, Santa Clara, 95051 (US); SHTEINGART, Hanan, Santa Clara, 95051 (US); ZAHAVI, Eitan, Santa Clara, 95051 (US)
(74) Representative: Mathys & Squire

(57) **Abstract**

Apparatuses, systems, methods, and/or techniques to identify anomalies in a computer network topology. In at least one embodiment, a first portion of a computer network is used to train a model and the train model is applied to a second portion of the network to predict link connections in the second portion. In at least one embodiment, such predictions are used to identify topology amomalies.

## Description

### TECHNICAL FIELD

At least one embodiment pertains to processors, systems, methods, and/or techniques to detect anomalies (e.g., errors and/or inefficiencies) in a network topology based at least in part on information derived from a network. In at least one embodiment, prior knowledge of the correct, anomaly-free, or as-designed network topology is not used to detect one or more anomalies within a network topology. In at least one embodiment, anomalies are detected in an actual operating network.

### BACKGROUND

In large computer networks (e.g., within a data center performing Large Language Models (LLMs)), network configurations have become very complex. One or more issues and/or inefficiencies within a particular network can negatively affect its performance. For example, human errors, such as in misconnections, missing connections, and/or extra connections between network devices within a computer network (e.g., within a data center) can cause significant performance degradation. Thus, performance could be improved within computer networks.

### SUMMARY

The invention is defined by the claims. In order to illustrate the invention, aspects and embodiments which may or may not fall within the scope of the claims are described herein.

Apparatuses, systems, methods, and/or techniques to identify anomalies in a computer network topology are described. In at least one embodiment, a first portion of a computer network is used to train a model and the train model is applied to a second portion of the network to predict link connections in the second portion. In at least one embodiment, such predictions are used to identify topology amomalies.

Any feature of one aspect or embodiment may be applied to other aspects or embodiments, in any appropriate combination. In particular, any feature of a method aspect or embodiment may be applied to an apparatus aspect or embodiment, and vice versa.

### BRIEF DESCRIPTION OF DRAWINGS

FIG. 1 illustrates a block diagram of an example computer system that includes network devices interconnected by a network, in accordance with at least one embodiment;
FIG. 2 illustrates a block diagram depicting a process, in accordance with at least one embodiment;
FIG. 3A illustrates an example of predictions generated and used to identify data cables that are misconnected (e.g., switched), in accordance with at least one embodiment;
FIG. 3B illustrates another example of predictions generated and used to identify an example anomaly, in accordance with at least one embodiment;
FIG. 4A illustrates an example of a prediction generated and used to identify a missing data cable where a communication link should exist, in accordance with at least one embodiment;
FIG. 4B illustrates another example of a prediction generated and used to identify a missing data cable where a communication link should exist, in accordance with at least one embodiment;
FIG. 5 illustrate an example of an iterative anomaly detection process, in accordance with at least one embodiment;
FIG. 6 is a flowchart illustrating a method, in accordance with at least one embodiment;
FIG. 7A illustrates an example of a system that includes a driver and/or runtime including one or more libraries to provide one or more application programming interfaces (APIs), in accordance with at least one embodiment;
FIG. 7B is block diagram illustrating an example of a processor and modules, according to at least one embodiment;
FIG. 8A illustrates logic, according to at least one embodiment;
FIG. 8B illustrates logic, according to at least one embodiment;
FIG. 9 illustrates an example data center system, according to at least one embodiment; and
FIG. 10 is a block diagram illustrating a computer system, according to at least one embodiment.

### DETAILED DESCRIPTION

In at least one embodiment, processors, systems, methods, and/or techniques detect anomalies (e.g., errors and/or inefficiencies) in a network topology. In at least one embodiment, such anomalies are detected based at least in part on information derived from the network (e.g., a current snapshot of an operating network). In at least one embodiment, such anomalies are detected without using any prior knowledge of the correct, anomaly-free, or as-designed network topology. In this sense, the overall network analysis may be considered an unsupervised analysis as no network topology information regarding missing connections, extra connections, node labels or node metadata, etc. is provided to predict the connections between nodes. In at least one embodiment, a current snapshot of an operating network is used to generate a network graph that includes features (e.g., extracted from the snapshot). Then, the network graph is divided into portions or folds, and set(s) of folds are identified. Each set omits at least one of the folds. Then, at least one machine learning process, such as a random forest model, corresponding to each of the set(s) is trained. Each of the machine learning processes is trained using its corresponding one of the set(s). Then, each of the machine learning processes uses a fold that was omitted from its corresponding set to generate predictions that classify each pair of nodes within that fold as being connected or not being connected. A confidence threshold may be used to select one or more of such predictions based upon confidence value(s) generated by the model and associated with the prediction(s). Any selected predictions may be compared to the network graph and any mismatches between a prediction and the network graph may be identified as being an anomaly. The network graph and/or network may be modified to remove any anomalies identified. In at least one embodiment, processors, systems, methods, and/or techniques operate autonomously to gather and model network information to detect anomalies.

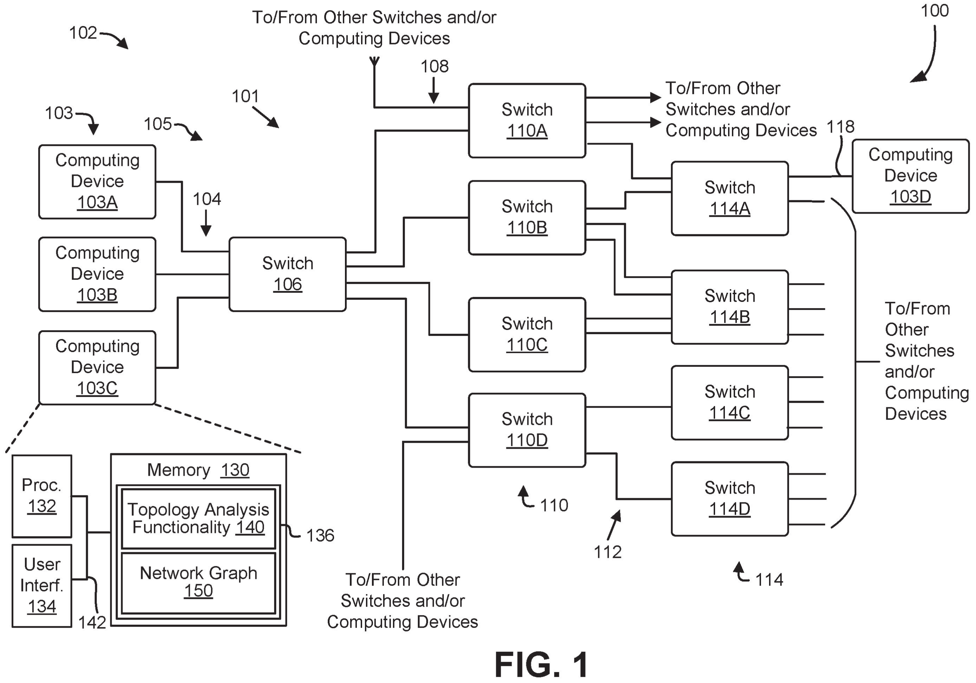

FIG. 1 illustrates a block diagram of an example computer system 100 that includes network devices 101 interconnected by a network 102, in accordance with at least one embodiment. The network devices 101 (which may be referred to as network nodes) may include one or more computing devices (e.g., one or more servers), one or more computing systems, one or more switches, one or more routers, one or more hubs, one or more repeaters, one or more bridges, one or more gateways, one or more firewalls, and/or one or more other types of network devices. By way of non-limiting examples, in FIG. 1, the network devices 101 include computing devices 103 and switches 106, 110, and 114.

Within the network 102, connections 105 interconnect the network devices 101. Each of the network devices 101 includes a communication interface (e.g., a network interface, a network interface controller (NIC), and/or the like) to be coupled to one or more of the connections 105 and to communicate with one or more other network devices over the connection(s). The communication interface may be implemented using software and/or hardware (e.g., one or more data ports, one or more data connectors, one or more wireless receivers, one or more wireless transmitters, one or more wireless transceivers, etc.). The connections 105 may be implemented as communication channels or links (e.g., wired and/or wireless connections or links). For example, the connections 105 may include one or more data cables, wireless signals, and/or other types of communication connections. By way of non-limiting example, the connections 105 may include connections 104, 108, 112, and 118. The network devices 101 may communicate over the connections 105 using any suitable communication protocol, such as Ethernet, InfiniBand, Fibre Channel, Internet Protocol, Transmission Control Protocol, User Datagram Protocol, and/or one or more other communication protocols.

The computer system 100 may implement a data center (e.g., a data center 900) or other multi-computing device environment or system, in which multiple computing devices (e.g., servers) may be connected together to form the network 102. In at least one embodiment, the network 102 may connect multiple computing devices to form a computing system, and/or multiple computing systems within a data center or other multi-computing device environment or system.

Within the network 102, one or more of the computing devices 103 and/or one or more computing systems each including at least one of the computing devices 103 may be physically located at different distances from other ones of the computing devices and/or other ones of the computing systems. For example, one or more of the computing devices 103 and/or one or more of the computing systems may be located in a different building or other location from other ones of the computing devices 103 and/or other ones of the computing systems. At least a portion of the network devices 101 (e.g., switches, routers, hubs, repeaters, bridges, gateways, firewalls, etc.) may route data traffic on the network 102 to and from one or more of the computing devices 103.

The network 102 has a network topology, which refers to an arrangement of different network elements (e.g., the network devices 101, the connections 105, etc.) within the network 102. A network topology may include physical and/or logical network elements. A network, such as the network 102, may be designed with and/or otherwise associated with a specification or network plan that indicates how the connections 105 are to connect the network devices 101 together. Such a network plan indicates an as-designed network topology of the network 102. However, the network 102 may actually be implemented differently from indicated by the network plan. Further, the network plan may include errors, inefficiencies, and/or other issues that affect performance. Issues with the network topology, such as inconsistencies with the network plan, errors, inefficiencies, and/or types of issues that impact performance of the network elements (e.g., the network devices 101, the connections 105, etc.) will be referred to as being anomalies. Examples of anomalies include broken connections, misconnections (e.g., a connection between network devices that is not specified by the network plan), extra connections, and/or missing connections within the network 102.

In at least one embodiment, the network 102 may connect multiple ones of the network devices 101, including multiple ones of the computing devices 103, to form one or more computing systems or subsystems (e.g., within a data center), and/or the network 102 may connect multiple computing systems or subsystems together (e.g., within a data center). One or more of the computing devices 103 and/or one or more of the computing systems may be physically connected to define at least a portion of the network topology. Different data centers may define different network topologies allowing network topologies to differ from one data center to another, and allowing a portion of a particular data center to differ from another portion of the same data center.

The network devices 101may include a large number of computing devices that are connected by a plurality of interconnection devices (e.g., routers and switches) and the connections 105 to form the network 102. The computing system 100 may be contained in a single building (e.g., an onsite data center), in a group of nearby buildings, such as data center campus, or spread over a great distance, such as a cloud-based data center. In each of these examples, the network topology interconnecting the computing devices 103 can vary significantly.

The network topology of the network 102 includes the network devices 101 and the connections 105 (e.g., links) that each interconnect two or more of the network devices 101. In at least one embodiment, the computing system 100 implements network topology analysis functionality 140 and/or at least one method to perform the unsupervised analysis of network connectivity to detect anomalies in the network topology.

In the example of FIG. 1, each of computing devices 103A-103C may be connected to the switch 106 by one or more of the connections 104. The switch 106, in turn, connects to the switches 110A-110D via the connections 108 (e.g., wired and/or wireless connections or links). In at least one embodiment, the switches 110A-110D connect to other switches in the computing system 100. For example, the switch 110B connects to switches 114A-114B via connections 112 (e.g., wired and/or wireless connections or links). Each connection between switches (e.g., one of the connections 108 between the switch 106 and the switch 110A) is considered a "hop" as data is passed from one of the network devices 101 to an adjacent one of the network devices 101. For each hop, one device (e.g., the switch 106) has at least one transmitter that sends data to at least one receiver in the downstream device (e.g., the switch 110A) at the other end of the hop. This process is repeated throughout the network 102 until the data arrives at its intended destination (which may be referred to as an endpoint or an endpoint device). For example, the computing device 103A may send a message to a computing device 103D, which in this example, is considered an endpoint. In this example, the computing device 103D may receive the message over the connection 118 between the switch 114A and the computing device 103D.

In at least one embodiment, output ports of the switches (e.g., the switch 110B) are connected to input ports of other switches (e.g., the switches 114A-114B) in the computing system 100, for example via one or more of the connections 105, which may be implemented as one or more data cables. If a data cable becomes disconnected or multiple data cables are misconnected (e.g., switched), the computer network 102 may not perform as designed (e.g., according to the network plan).

In at least one embodiment, at least a portion of the network devices 101 each include memory 130, one or more processors 132, and a user interface 134. The memory 130 (e.g., one or more non-transitory processor-readable medium) may store processor executable instructions 136 that when executed by the processor(s) 132 implement the topology analysis functionality 140, and/or the like. By way of additional non-limiting examples, the memory 130 (e.g., one or more non-transitory processor-readable medium) may be implemented, for example, using volatile memory (e.g., dynamic random-access memory ("DRAM")) and/or nonvolatile memory (e.g., a hard drive, a solid-state device ("SSD"), and/or the like). In at least one embodiment, at least a portion of the memory 130 is implemented using at least a portion of any system(s) depicted in and/or described with respect to FIGS. 1-10. In at least one embodiment, at least a portion of the memory 130 is used to implement at least a portion of any system(s) depicted in and/or described with respect to FIGS. 1-10.

The processor(s) 132 may include one or more circuits that perform at least a portion of the instructions 136 stored in the memory 130. The processor(s) 132 may include one or more parallel processing units ("PPU(s)"), such as one or more graphics processing units ("GPU(s)"), one or more massively parallel GPU(s), and/or the like. In at least one embodiment, massively parallel GPU(s) refer to a collection of one or more GPUs, or any suitable processing units, which may be utilized to perform various processes in parallel. The processor(s) 132 may be implemented, for example, using a main central processing unit ("CPU") complex, one or more microprocessors, one or more microcontrollers, the PPU(s) (e.g., GPU(s)), one or more data processing units ("DPU(s)"), one or more arithmetic logic units ("ALU(s)"), and/or the like. In at least one embodiment, at least a portion of the processor(s) 132 is implemented using at least a portion of any system(s) depicted in and/or described with respect to FIGS. 1-10. In at least one embodiment, at least a portion of the processor(s) 132 is used to implement at least a portion of any system(s) depicted in and/or described with respect to FIGS. 1-10.

The user interface 134 may include a display device (not shown) that a user may use to view information generated and/or displayed by the network device. The user may use the user interface 134 to enter user input into the network device and to view data displayed by the network device, such as results of a topology analysis. The user interface 134 may communicate (e.g., wirelessly) with a user device (e.g., a cellular telephone, a laptop computer, a tablet, and/or the like) and may receive user input from the user device. In at least one embodiment, at least a portion of the user interface 134 is implemented using at least a portion of any system(s) depicted in and/or described with respect to FIGS. 1-10. In at least one embodiment, at least a portion of the user interface 134 is used to implement at least a portion of any system(s) depicted in and/or described with respect to FIGS. 1-10.

The memory 130, the processor(s) 132, and/or the user interface 134 may communicate with one another over one or more connections 142, such as a bus, a Peripheral Component Interconnect Express ("PCIe") connection (or bus), and/or the like. In at least one embodiment, at least a portion of the connection(s) 142 is implemented using at least a portion of any system(s) depicted in and/or described with respect to FIGS. 1-10. In at least one embodiment, at least a portion of the connection(s) 142 is used to implement at least a portion of any system(s) depicted in and/or described with respect to FIGS. 1-10.

In the example embodiment of FIG. 1, data may be transmitted from one of the network devices 101 to another of the network devices 101 through selected network components (e.g., a portion of the network devices 101) of the computing system 100. In this example, the computing device 103A is coupled to the switch 106 by one or more of the connections 104. From the switch 106, the data may be delivered to the computing device 103D via either (or both) the switches 110A and 110B and the switch 114A. The various interconnections between the network devices 101 defines a network topology for the computer network (e.g., the computing system 100).
If performed by the processor(s) 132, the topology analysis functionality 140 may detect anomalies (e.g., errors) in the network topology of the network 102. In at least one embodiment, the topology analysis functionality 140 detects anomalies based on information derived from the network devices 101 (e.g., network nodes) and does not assume any knowledge of the correct, anomaly-free, or as-designed network topology (e.g., specified in a network plan). Instead, the topology analysis functionality 140 detects anomalies in the actual operating network 102. In at least one embodiment, the topology analysis functionality 140 uses one or more machine learning processes, such as a random forest model, trained without network topology information regarding node labels, missed connections, extra connections, etc. to predict whether pairs of network nodes are connected or not connected. In at least one embodiment, the topology analysis functionality 140 operates autonomously to gather and model network information to detect anomalies (e.g., using an unsupervised analysis). In at least one embodiment, the topology analysis functionality 140 assumes connection symmetry (e.g., a connection where download and upload speeds are the same) but assumes no prior knowledge of the as-designed network topology.

In at least one embodiment, the topology analysis functionality 140 uses an ensemble machine learning technique, such as one or more random forest model, one or more Extremely Randomized Trees, one or more Gradient Boosting Machines (GBM(s)), and/or one or more other type of ensemble machine learning technique. In at least one embodiment, the topology analysis functionality 140 uses one or more machine learning classifiers, such as GBM(s), one or more Support-Vector-Machines (SVM(s)), one or more Multi-Layer-Perceptrons (MLP(s)), one or more logistic regression models, and/or one or more other types of machine learning classifiers.

In at least one embodiment, the topology analysis functionality 140 uses one or more random forest model to detect anomalies in a network topology. Random forest is an ensemble algorithm that builds multiple decision trees and aggregates their predictions. As the number of trees increases, performance of the model typically improves, but only up to a certain point. Convergence in a random forest model is achieved when adding more trees results in diminishing returns in terms of performance improvement. When the model has converged may be determined by an out-of-bag (OOB) error rate, a validation error rate, accuracy, precision, recall, F1-score, and/or another metric.

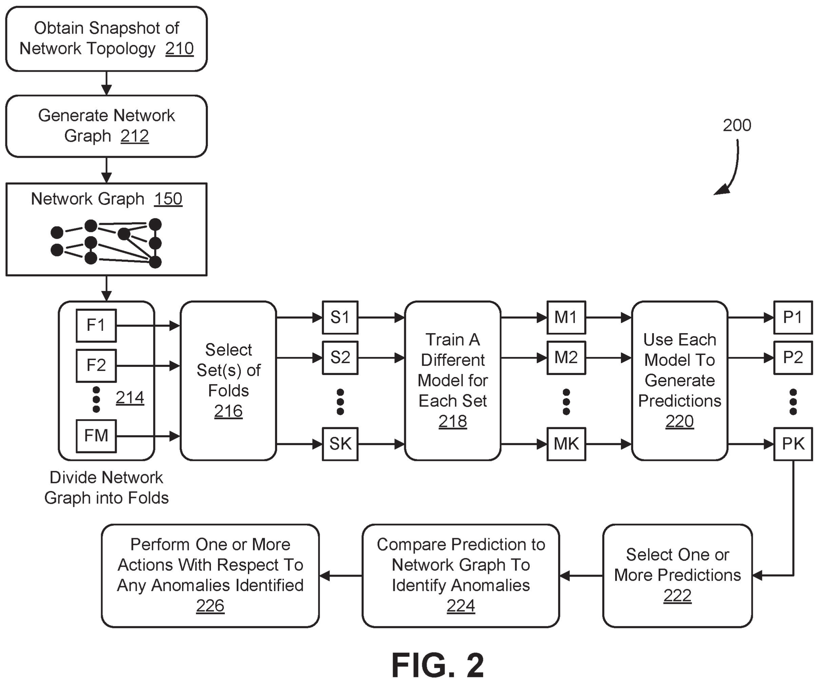

FIG. 2 illustrates a block diagram depicting a process 200, in accordance with at least one embodiment. The process 200 may be performed by the computing system 100. For ease of illustration, the process 200 will be described as being performed by the topology analysis functionality 140 (e.g., performed by the processor(s) 132). However, the process 200 may be performed by other systems, such as those described herein, and/or by different processor(s), such as those described herein, using different instructions, such as those described herein.

In at least one embodiment, at block 210, the topology analysis functionality 140 obtains a snapshot of the network topology of the network 102. The topology analysis functionality 140 may use any suitable software and/or hardware tool to obtain the snapshot, such as SolarWinds Network Topology Mapper, Cisco Network Assistant, Microsoft Visio, Nagios XI, PRTG Network Monitor, NetBrain, WhatsUp Gold, OpenNMS, Zabbix, Lucidchart, and/or the like.

In at least one embodiment, at block 212, the topology analysis functionality 140 uses the snapshot to generate a network graph 150 representing a present configuration of a computer network (e.g., the network 102). The network graph 150 includes nodes (representing the network devices 101) and connections between pairs of nodes (representing the connections 105). The topology analysis functionality 140 analyzes the snapshot to obtain features with respect to the network devices 101 that the topology analysis functionality 140 adds to the nodes of the network graph 150, and/or to obtain features with respect to the connections 105 that the topology analysis functionality 140 adds to the links and/or nodes of the network graph 150. In at least one embodiment, the topology analysis functionality 140 uses one or more algorithms or methods to obtain features from the snapshot associated with a connection between each pair of nodes within the network graph 150. For example, the topology analysis functionality 140 may use one or more algorithms (e.g., Node2Vec) to obtain features from the snapshot for each node (e.g., the switch 110C), including its connection to neighboring nodes (e.g., the switches 106 and 114B). In at least one embodiment, the features of each node include the name of the node, which typically contains embedded semantic information, such as hierarchical or organizational information. Features of a connection between a pair of nodes may be obtained by concatenating the features of each node in the pair of nodes. For example, in fat-tree topologies, the level to which a node belongs is often reflected in its name. In at least one embodiment, a parser, such as Drain, can be used to extract dynamic fields from the node names thus capturing embedded information regarding the network topology.

In at least one embodiment, at block 212, the topology analysis functionality 140 uses a current snapshot of the network 102 to generate the network graph 150, and that snapshot may include anomalies, which may be included in the network graph 150. In at least one embodiment, the topology analysis functionality 140 utilizes a link prediction framework that involves training a model (e.g., the random forest model) on a subset of the network graph 150 and using the trained model to predict link connectivity on other parts of the network graph 150. A subset of the network graph 150 may also be referred to as a fold. In at least one embodiment, at block 214, the topology analysis functionality 140 divides the nodes of the network graph 150 into a number M of folds F1-FM. In at least one embodiment, each node may be included in only one of the folds F1-FM. In at least one embodiment, some of the folds F1-FM may include one or more nodes also included in one or more other ones of the folds F1-FM. The folds F1-FM may each include the same number of nodes or different numbers of nodes.

In at least one embodiment, at block 216, the topology analysis functionality 140 selects a number K of sets S1-SK of the folds. In at least one embodiment, each of the set(s) S1-SK omits one or more of the folds F1-FM. In at least one embodiment, each of the set(s) S1-SK includes all but one of the folds F1-FM. For example, the number M may be equal to the number K and each of the set(s) S1-SK may omit a different one of the folds F1-FM. At block 216, the topology analysis functionality 140 may select the sets S1-SK in parallel.

In at least one embodiment, at block 218, the topology analysis functionality 140 uses each of the set(s) S1-SK to train a different one of machine learning process(es) M1-MK. In at least one embodiment, the machine learning process(es) M1-MK include one or more random forest models, one or more Extremely Randomized Trees, GBM(s), one or more machine learning classifiers, GBM(s), SVM(s), MLP(s), one or more logistic regression models, and/or one or more other types of machine learning processes.

In at least one embodiment, at block 220, the topology analysis functionality 140 uses the trained machine learning process(es) M1-MK to generate predictions P1-PK. For each of the trained machine learning process(es) M1-MK, the predictions predict links in the fold that was omitted from the set(s) S1-SK used to train the machine learning process. In this manner, the topology analysis functionality 140 generates a different model (e.g., the random forest model) to predict links in each of the folds F1-FM. For example, a graph can be divided into ten folds (e.g., folds F1-F10) at block 214. The topology analysis functionality 140 may use features (e.g., determined for the connections and/or nodes) in folds F1-F9 to train a first model (e.g., a first random forest model) that the topology analysis functionality 140 uses to predict connections within the fold F10. Then, the topology analysis functionality 140 uses features (e.g., determined for the connections and/or nodes) in folds F2-F10 to train a second model that the topology analysis functionality 140 uses to predict connections within the fold F1. Then, the topology analysis functionality 140 uses features determined for the connections in folds F1 and F3-F10 to train a third model that the topology analysis functionality 140 uses to predict connections within the fold F2 and so forth until the topology analysis functionality 140 uses features (e.g., determined for the connections and/or nodes) in each combination of nine folds to train a different model (e.g., a different random forest model) that the topology analysis functionality 140 uses to predict connections within the remaining one of the ten folds. The same principles can be applied and used to train models for network graphs divided into other numbers of folds. This approach permits the generation of predictions for all possible links in the network graph 150. In one embodiment, a network graph (e.g., the network graph 150) with *N* nodes can be processed to yield *N*² predictions for every pair of nodes in the network graph 150. At block 218, the topology analysis functionality 140 may train the machine learning process(es) M1-MK in parallel (e.g., using one or more PPUs).

In at least one embodiment, at block 220, the topology analysis functionality 140 uses the trained machine learning process(es) M1-MK to generate predictions P1-PK that predict whether or not there should be a connection between any two nodes within the network graph 150. For example, the trained machine learning process(es) M1-MK may classify each pair of nodes as being connected or not being connected. In at least one embodiment, the topology analysis functionality 140 trains each of the machine learning process(es) M1-MK to classify a pair of nodes as being connected or not connected using one of the set(s) S1-SK. Then, the topology analysis functionality 140 provides the particular fold omitted from the training data used to train a particular one of the machine learning process(es) M1-MK to that particular machine learning process as input. Then, the particular machine learning process classifies each pair of nodes in the particular fold and outputs a prediction including these classifications. In at least one embodiment, the predictions include a confidence value associated with each of the classifications. At block 218, the topology analysis functionality 140 may generate the predictions P1-PK using the machine learning process(es) M1-MK in parallel (e.g., using one or more PPUs).

In at least one embodiment, at block 222, the topology analysis functionality 140 selects any of these predictions, for example, based on an associated confidence value (e.g., predictions having a confidence value greater than a confidence threshold value, prediction(s) associated with a predetermined number of the highest confidence values, etc.). In at least one embodiment, at block 224, the topology analysis functionality 140 compares the selected predictions to existing connections in the network graph 150 representing the network 102 (e.g., within the computer system 100) and identifies any mismatches. A mismatch may be characterized as being an anomaly. In at least one embodiment, the comparison can determine whether an existing connection should be there (no anomaly), that a non-existent connection should not be there (no anomaly), that a missing connection should be there (anomaly), and that an existing connection should not be there (anomaly).

In at least one embodiment, at block 226, the topology analysis functionality 140 performs one or more actions with respect to any anomalies identified in block 224. For example, the action(s) may include modifying the network graph 150 to eliminate any mismatches. By way of another non-limiting example, the action(s) may include generating a ticket to cause a missing connection that should be present in the network 102 to be repaired, enabled, and/or added. By way of another non-limiting example, the action(s) may include generating a ticket to cause an existing connection should not be there in the network 102 to be removed and/or disabled. By way of yet another non-limiting example, the action(s) may include displaying any anomalies identified. By way of yet another non-limiting example, the action(s) may include automatically enabling or disabling one or more connections to address an anomaly, and/or instructing one or more of the network devices 101 to modify their routing tables to route network traffic in a manner that avoids an anomaly.

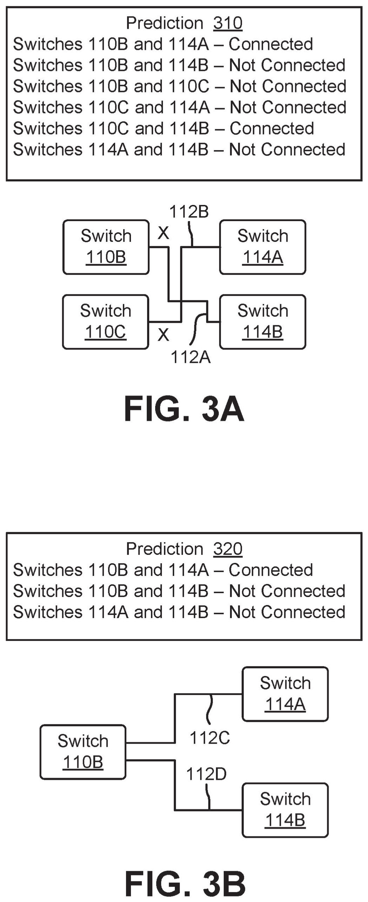

FIGS. 3A-4B illustrate example predictions generated for anomalies in a network topology, in accordance with at least one embodiment. FIG. 3A illustrates an example of predictions 310 generated and used to identify data cables that are misconnected (e.g., switched), in accordance with at least one embodiment. The original design of the computer network (e.g., included in a network plan) includes a data cable for a communication link 112A (e.g., one of the connections 105) connecting the switch 110B and the switch 114A. Similarly, the original design of the computer network includes a data cable for a communication link 112B (e.g., one of the connections 105) connecting the switch 110C and the switch 114B. However, in actuality, the data cables for the communication links 112A and 112B were reversed such that the communication link 112A is actually between the switches 110B and 114B while the communication link 112B is actually between the switches 110C and 114A. During an analysis of the computer network, the topology analysis functionality 140 (e.g., performed by the processor(s) 132) used the network graph 150 to determine that the communication links 112A and 112B are switched. For example, the topology analysis functionality 140 generated the predictions 310 that predicted the switches 110B and 114A are connected and the switches 110B and 114B are not connected. Similarly, the predictions 310 predicted the switches 110C and 114A are not connected and the switches 110C and 114B are connected. Additionally, the predictions 310 predicted the switches 110B and 110C are not connected and the switches 114A and 114B are not connected. When the topology analysis functionality 140 compared the predictions 310 to the network graph 150 created from the snapshot of the computer network (e.g., the network 102), the topology analysis functionality 140 determined that the communication link 112A between the switches 110B and 114B and the communication link 112B between the switches 110C and 114A should both be removed and/or disabled. In other words, these connections are anomalies. Further, the topology analysis functionality 140 determined that a communication link should be established between the switches 110B and 114A and a communication link should be established between the switches 110C and 114B. In other words, the lack of these connections were determined to be anomalies. The topology analysis functionality 140 may perform any action(s) described herein (e.g., with respect to block 226) with respect to these anomalies.

FIG. 3B illustrates another example of predictions 320 generated and used to identify an example anomaly, in accordance with at least one embodiment. In the example of FIG. 3B, the topology analysis functionality 140 (e.g., performed by the processor(s) 132) may predict that a data cable for a communication link 112C connecting the switch 110B to the switch 114A may be essential to optimal network operation while the data cable for the communication link 112D connecting the switch 110B to the switch 114B may be unnecessary. In other words, the topology analysis functionality 140 may generate the predictions 320 that predict the switches 110B and 114A are connected and the switches 110B and 114B are not connected. When the topology analysis functionality 140 compared the predictions 310 to the network graph 150 created from the snapshot of the computer network (e.g., the network 102), the topology analysis functionality 140 determined the presence of the data cable for the communication link 112C is predicted and is thus not classified as an anomaly. However, the presence of the data cable for the communication link 112D is not predicted and is considered an anomaly. The topology analysis functionality 140 may perform any action(s) described herein (e.g., with respect to block 226) with respect to this anomaly, such as indicating that the communication link 112D should be removed and/or disabled.

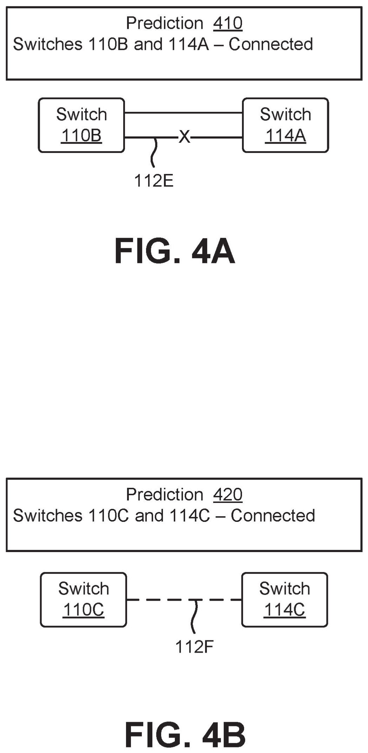

FIG. 4A illustrates an example of a prediction 410 generated and used to identify a missing data cable where a communication link should exist, in accordance with at least one embodiment. In the example of FIG. 4A, the topology analysis functionality 140 (e.g., performed by the processor(s) 132) predicted that the switch 110B is connected to the switch 114A, but when the topology analysis functionality 140 compared the predictions 410 to the network graph 150 created from the snapshot of the computer network (e.g., the network 102), the topology analysis functionality 140 determined that the switches 110B and 114A are not connected. In other words, a communication link 112E connecting the switch 110B to the switch 114A may be essential to optimal network operation. It is possible that an existing data cable is damaged or disconnected or it is possible that no data cable was ever installed for the communication link 112E. In any event, the missing data cable for the communication link 112E is classified by the topology analysis functionality 140 as an anomaly. The topology analysis functionality 140 may perform any action(s) described herein (e.g., with respect to block 226) with respect to this anomaly. For example, operation of the computer network (e.g., the network 102) may be improved by adding a data cable for the communication link 112E to connect the switch 110B to the switch 114A.

FIG. 4B illustrates another example of a prediction 420 generated and used to identify a missing data cable where a communication link should exist, in accordance with at least one embodiment. In the example of FIG. 4B, the topology analysis functionality 140 (e.g., performed by the processor(s) 132) predicts that the switch 110C is connected to the switch 114C, but when the topology analysis functionality 140 compared the predictions 420 to the network graph 150 created from the snapshot of the computer network (e.g., the network 102), the topology analysis functionality 140 determined that the switches 110C and 114C are not connected. In other words, a data cable for the communication link 112F (shown in dashed lines) should be installed to connect the switch 110C to the switch 114C. In this example, the computer network (e.g., the network 102) never included the communication link 112F. This is considered an anomaly in the computer topology. The topology analysis functionality 140 may perform any action(s) described herein (e.g., with respect to block 226) with respect to this anomaly. For example, operation of the computer network (e.g., the network 102) may be improved by adding the data cable for the communication link 112F to connect the switch 110C to the switch 114C.

In at least one embodiment, the topology analysis functionality 140 (e.g., performed by the processor(s) 132) may be used to improve and/or optimize network performance. For example, the topology analysis functionality 140 (e.g., performed by the processor(s) 132) may update the network graph 150 and/or the network 102 to address any detected anomalies. For example, the topology analysis functionality 140 (e.g., performed by the processor(s) 132) can add any missing connections to the network graph 150 and/or the network 102, and/or remove any unneeded connections from the network graph 150 and/or the network 102. In at least one embodiment, the topology analysis functionality 140 (e.g., performed by the processor(s) 132) can cause corrections to be made to the computer network (e.g., the network 102). For example, the topology analysis functionality 140 (e.g., performed by the processor(s) 132) may notify a network operator of an anomaly (e.g., generate a display on the user interface 134 depicting the anomaly) and the network operator may add or remove a connection to remove the anomaly from the computer network. This process can also be used to correct switched cables, which essentially removes unneeded connections and adds missing connections. For example, FIG. 3A illustrates a network that included correctly designed connections in which a data cable connection is between the switches 110B-114A and the switches 110C-114B, respectively, but the data cables are inadvertently switched. The network graph 150 will reveal connections between the switches 110B-114B and between the switches 110C-114A, respectively. The topology analysis functionality 140 (e.g., performed by the processor(s) 132) will detect four anomalies, namely, missing connections between the switches 110B-114A and between the switches 110C-114B as well as unneeded connections between the switches 110B-114B and between the switches 110C-114A.

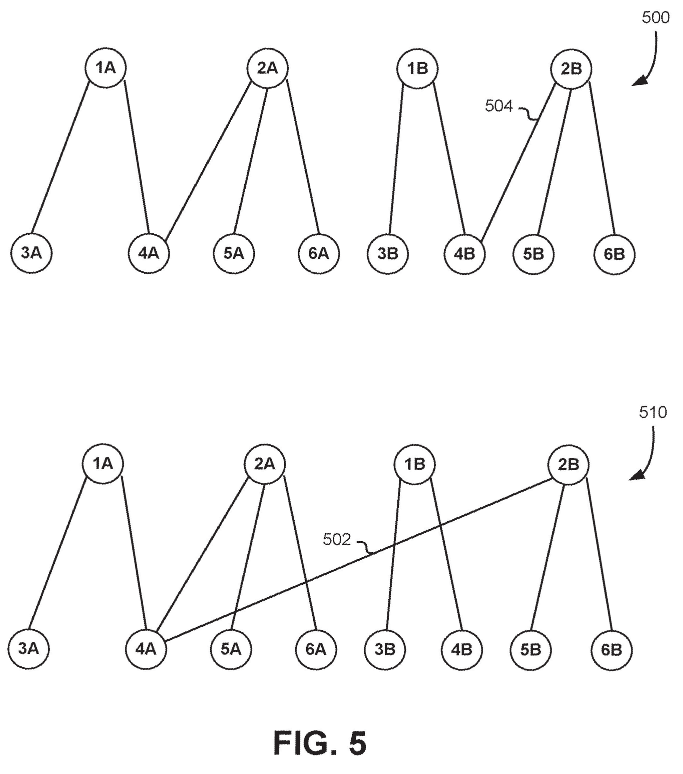

FIG. 5 illustrates an example of an iterative anomaly detection process, in accordance with at least one embodiment. FIG. 5 depicts an as-designed network topology 500 without any anomalies illustrated above an as-implement network topology 510 with anomalies. The network topologies 500 and 510 each include nodes 1A-6A and 1B-6B, which may each represent a network device (e.g., a different one of the network devices 101). Following the correction of connections (e.g., missing or extra connections), such as those illustrated in FIGS. 3A-4B, the computer network (e.g., the network 102) may be reevaluated to identify additional anomalies that may have been previously obscured by more obvious connection errors. For example, referring to FIG. 5, the topology analysis functionality 140 (e.g., performed by the processor(s) 132) may predict only a first anomaly, namely that node 4A should not be connected to node 2B. By way of a non-limiting example, communication link 502 between node 4A and node 2B may be unnecessary. The first anomaly may be corrected in the network graph 150 by modifying or revising the network graph 150. After this anomaly is corrected (e.g., the network graph 150 is revised to eliminate the communication link 502), the topology analysis functionality 140 may be used to predict a second anomaly, namely, that the node 4B should be connected to node 2B. In this manner, the topology analysis functionality 140 may generate predictions using newly trained models, in the manner described above, but using the revised network graph 150. The second anomaly might not be apparent enough for the topology analysis functionality 140 to predict while the node 4A is connected to the node 2B. However, after removing this link, it may be easier for the topology analysis functionality 140 to detect the missing link between nodes 4B and 2B. This second iteration may be more likely to detect a missing communication link 504 between node 4B and node 2B. Thus, by repeating application of the topology analysis functionality 140 in an iterative process additional anomalies may be detected. The network graph 150 may be revised yet again to correct for the missing communication link 504 between nodes 4B and 2B. Then, the topology analysis functionality 140 may be used to perform a third iteration using the newly revised network graph 150.

The correction of the network graph 150 and reevaluation steps may be repeated iteratively until no more anomalies are detected with high confidence values, indicating a convergence to network optimization. In the context of a random forest model, convergence refers to the point at which adding more trees to the forest does not significantly improve the model's performance. The optimized network topology information may be provided to engineers who implement the actual network connections.

As mentioned above, the topology analysis functionality 140 may have updated the network graph 150 in response to the detection of network anomalies in a first anomaly detection process, and the updated graph may be used to perform a second anomaly detection process to discover further network anomalies, and anomaly correction if any further anomalies are found. If the computer network (e.g., the network 102) was modified, a new snapshot may be used to generate a new network graph 150, and the new graph may be used to perform anomaly detection, and anomaly correction if any anomalies are found.

The iterative process provides a significant improvement in network topology, which optimizes the efficiency and reliability of a network infrastructure. In at least one embodiment, the topology analysis functionality 140 can be applied to model planned revisions of a computer network (e.g., the network 102), such as the addition of new computing devices that require reconfiguration of switch interconnections or addition of new switches. The new infrastructure can be added to a network graph and the iterative optimization process performed to determine the optimal topology of the expanded network.

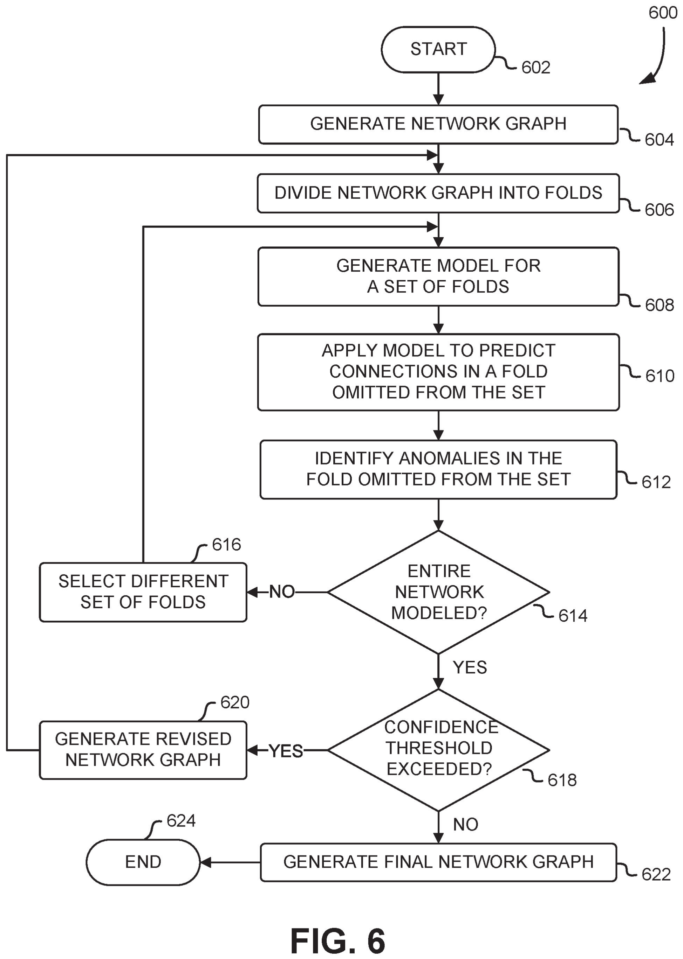

FIG. 6 is a flowchart 600 illustrating a method 600, in accordance with at least one embodiment. At least a portion of the method 600 may be performed by the computing system 100. At least a portion of the method 600 may be performed by the topology analysis functionality 140, if executed by the processor(s) 132. For ease of illustration, the method 600 will be described as being performed by the topology analysis functionality 140 (e.g., performed by the processor(s) 132). However, the method 600 may be performed by other systems, such as those described herein, and/or by different processor(s), such as those described herein, using different instructions, such as those described herein.

In at least one embodiment, at a start 602, a snapshot of a computer network (e.g., the network 102) is obtained. The snapshot may be obtained using a suitable software and/or hardware tool, such as those described herein with respect to block 210 (see FIG. 2). In at least one embodiment, the topology analysis functionality 140 uses such tool(s) to obtain the snapshot.

In block 604, the topology analysis functionality 140 (e.g., if executed by the processor(s) 132) uses the snapshot to generate a network graph (e.g., the network graph 150) of the network in its current actual configuration. In at least one embodiment, the topology analysis functionality 140 generate the network graph using any techniques described with respect to block 212 (see FIG. 2). In block 606, the topology analysis functionality 140 (e.g., if executed by the processor(s) 132) divides the network graph representing the computer network into a plurality of portions or folds (e.g., the folds F1-FM). In at least one embodiment, the topology analysis functionality 140 divides the network graph into folds using any techniques described with respect to block 214 (see FIG. 2). Each of the folds may include two or more network nodes. For example, the network graph may be divided into a number (e.g., ten) of different folds.

At block 608, the topology analysis functionality 140 (e.g., if executed by the processor(s) 132) generates and/or trains a model using a first set of the folds (e.g., network portions). In at least one embodiment, the topology analysis functionality 140 generates and/or trains a model using any techniques described with respect to block 216 and/or block 218 (see FIG. 2). In at least one embodiment, the first set S10includes folds F1-F9 of folds F1-F10 of the network graph. In at least one embodiment, the topology analysis functionality 140 generates and/or trains a model M10 using the first set S10.

In block 610, the topology analysis functionality 140 (e.g., if executed by the processor(s) 132) applies the model to a second portion(e.g., the fold F10) of the network graph (e.g., the network graph 150) to predict network connections in the second network portion. In one embodiment, using the example above, the second portion of the network is the fold F10 of the ten folds F1-F10 into which the network graph was divided in block 606. In at least one embodiment, the topology analysis functionality 140 uses the trained model M10 to perform inference with respect to the fold F10., and classify each pair of nodes in the fold F10 as either being connected or not being connected. In at least one embodiment, the topology analysis functionality 140 applies the model using any techniques described with respect to block 220 (see FIG. 2).

In at least one embodiment, at block 612, the topology analysis functionality 140 (e.g., if executed by the processor(s) 132) identifies anomalies in the second network portion. In at least one embodiment, an anomaly is identified when the actual connections from the network graph (e.g., the network graph 150) do not match the predicted connections from the applied model. In at least one embodiment, the topology analysis functionality 140 identifies anomalies using any techniques described with respect to block 222 and/or block 224 (see FIG. 2).

As described above, the topology analysis functionality 140 divides the network graph into a plurality of different folds (e.g., folds F1-FM). In the example above, the network graph is divided into ten folds. In at least one embodiment, the topology analysis functionality 140 creates and/or trains a model (e.g., the model F10) using a set of network portions (e.g., folds F1-F9) that together may be characterized as being a first network portion, and applies that model to predict link connections in a second network portion (e.g., the fold F10), which does not include any folds that are part of the first network portion. In the present example, the model trained using folds F1-F9 is applied to predict link connections in fold F10. Then, in at least one embodiment, one or more of these predictions (e.g., included in a prediction P10) is/are compared to the network graph and any inconsistencies identified as being anomalies.

If the set(s) (e.g., the set(s) S1-SK) include any additional sets for which predictions have not been generated, the method creates and/or trains another model (e.g., the model M1) for a different first network portion (e.g., the folds F2-F10), and applies that model to predict link connections in a different second network portion (e.g., the fold F1), which does not include any folds that are part of the first network portion. In the present example, the model developed using folds F2-F10 is applied to predict link connections in the fold F1. In this manner, the topology analysis functionality 140 may iteratively train models of different groups or sets of folds as a "first portion" of the network graph and applies the models to "second portions" of the network graph that are not part of the first portion. In at least one embodiment, the topology analysis functionality 140 may train models of different groups or sets of folds as a "first portion" of the network graph in parallel, and apply the models to "second portions" of the network graph that are not part of the first portion in parallel. In at least one embodiment, the topology analysis functionality 140 performs blocks 608-612 in parallel.

In decision block 614, the topology analysis functionality 140 (e.g., if executed by the processor(s) 132) determines whether the entire network has been modelled and the models applied to the second portions of the network graph to predict link connections for the entire computer network. If the entire network has not been modelled, the result of decision block 614 is "NO," and in block 616, the topology analysis functionality 140 selects a different set of folds as the first portion and a different fold as the second portion. The topology analysis functionality 140 then returns to block 608 and repeats the process of model creation with a different first portion and application of the model to a different second portion of the network graph.

If all portions of the computer network have been modelled and the models applied to predict link connections throughout the entire computer network, the result of decision block 614 is "YES." If the decision block 614 is "YES," the topology analysis functionality 140 advances to decision block 618. As mentioned herein, the topology analysis functionality 140 may perform blocks 608-612 in parallel for all of the first and second portions of the network graph. In such embodiments, decision block 614 and block 616 may be omitted, and the topology analysis functionality 140 may advance to decision block 618 after block 612.

In at least one embodiment, at decision block 618, the topology analysis functionality 140 (e.g., if executed by the processor(s) 132) determines whether prediction confidence value(s) associated with one or more of the predictions identified as being anomalies exceed a confidence threshold. If any of the prediction confidence value(s) (each associated with an anomaly) exceeds the confidence threshold, the result of decision block 618 is "YES" and the topology analysis functionality 140 considers any of the anomalies associated with these prediction confidence values to be valid.

If the decision in decision block 618 is "YES," in at least one embodiment, in block 620, the topology analysis functionality 140 performs at least one action with respect to any anomaly determined to be valid. In at least one embodiment, in block 620, the topology analysis functionality 140 performs any of the action(s) described with respect to block 226 (see FIG. 2). In at least one embodiment, at block 620, the topology analysis functionality 140 may generate a revised network graph (e.g., the network graph 150) that includes changes detected as part of the link prediction process of block 610 and anomaly detection process of block 612. The topology analysis functionality 140 may then return to block 606 and iteratively repeat the network analysis using the revised network graph. This includes performing blocks 606-620.

In at least one embodiment, some of the detected anomalies in a particular analysis may have associated prediction confidence values that exceed the confidence threshold while other detected anomalies in the particular analysis may have associated prediction confidence values that do not exceed the confidence threshold. In this case, the topology analysis functionality 140 may recommend changes in link connections only for those predictions that have prediction confidence values that exceed the confidence threshold. In block 620, the topology analysis functionality 140 may generate a revised network graph with changes only for those anomalies that have associated prediction confidence values that exceed the confidence threshold.

In at least one embodiment, the iterative process reaches a point where the topology analysis functionality 140 determines that none of the prediction confidence values associated with the identified anomalies exceed the confidence threshold, and the result of decision block 618 is "NO." Thus, none of the identified anomalies are considered to be valid. At this point, the network graph and/or the computer network (e.g., the network 102) may be considered optimized.

In block 622, the topology analysis functionality 140 may generate a final network graph (e.g., the network graph 150) defining the entire optimized computer network. The method 600 may end at 624. Network operators may use the final network graph as a guide to optimization of connections in the entire computer network.

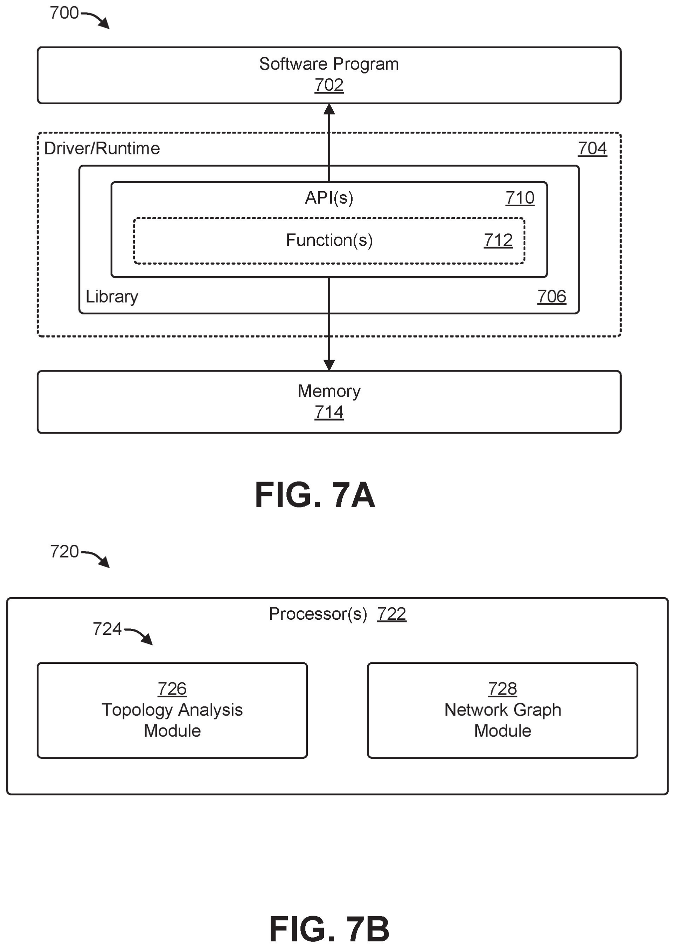

FIG. 7A illustrates an example of a system 700 that includes one or more drivers and/or one or more runtimes (illustrated as reference numeral 704) including one or more libraries 706 to provide one or more application programming interfaces ("API(s)") 710, in accordance with at least one embodiment. In at least one embodiment, the system 700 includes the driver(s) 704 and/or the runtime(s) 704 including the library(ies) 706 to provide to the API(s) 710. In at least one embodiment, the API(s) 710 is/are sets of software instructions that, if executed, cause one or more processors (e.g., processor(s) 722 illustrated in FIG. 7B) to perform one or more computational operations. In at least one embodiment, one or more of the API(s) 710 is/are distributed or otherwise provided as a part of one or more of the library(ies) 706, one or more of the runtime(s) 704, one or more of the driver(s) 704, and/or one or more component of any other grouping of software and/or executable code further described herein. In at least one embodiment, one or more of the API(s) 710 perform one or more computational operations in response to invocation by one or more software programs 702.

In at least one embodiment, one or more of the software program(s) 702 is/are a software module and/or include(s) one or more software modules. In at least one embodiment, a software module is as further illustrated non-exclusively in FIG. 7B as one or more modules 724 and described with respect thereto. In at least one embodiment, one or more of the software program(s) 702 is/are a collection of software code, commands, instructions, and/or other sequences of text to instruct a computing device (e.g., one or more of the computing devices 103) to perform one or more computational operations and/or invoke one or more other sets of instructions, such as the API(s) 710 or API function(s) 712, to be executed by the computing device. In at least one embodiment, functionality provided by one or more of the API(s) 710 includes the API function(s) 712, such as those usable to accelerate one or more portions of the software program(s) 702 using one or more parallel processing units (PPUs), such as graphics processing units (GPUs).

In at least one embodiment, one or more of the API(s) 710 is/are one or more hardware interfaces to one or more circuits to perform one or more computational operations. In at least one embodiment, one or more of the API(s) 710 described herein are implemented as one or more circuits to perform one or more techniques described in connection with FIGS. 1-6. In at least one embodiment, one or more of the software program(s) 702 include instructions that, if executed, cause one or more hardware devices and/or circuits to perform one or more techniques further described in connection with FIGS. 1-6. In at least one embodiment, the system 700 includes one or more or all components of at least one of the computing devices 103 described in relation to FIG. 1, and the system 700 may perform one or more or all of the processes and/or operations that the systems and components of the system that at least one of the computing devices 103 performs.

In at least one embodiment, the software program(s) 702, such as user-implemented software programs, utilize one or more of the API(s) 710 to perform various computing operations, such as memory reservation, matrix multiplication, arithmetic operations, and/or any computing operation performed by PPUs, such as GPUs, as further described herein. In at least one embodiment, the function(s) 712 include a set of callable functions provided by one or more of the API(s) 710 that are referred to herein as APIs, API functions, software functions, and/or functions, that individually perform one or more computing operations, such as computing operations related to parallel computing. In at least one embodiment, one or more of the API(s) 710 perform the topology analysis function 140 to analyze the network graph (e.g., the network graph 150) to predict link connections and detect topology anomalies, and/or perform other operations described herein (e.g., in connection with FIGS. 1-6).

In at least one embodiment, one or more of the software program(s) 702 interact or otherwise communicate with one or more of the API(s) 710 to perform one or more computing operations using one or more processors (e.g., processor(s) 722 illustrated in FIG. 7B), such as one or more PPUs, such as GPUs. In at least one embodiment, one or more computing operations using one or more PPUs include at least one or more groups of computing operations to be accelerated by execution at least in part by said one or more PPUs. In at least one embodiment, one or more of the software program(s) 702 interact with one or more of the API(s) 710 to generate the network graph 150, and/or perform other operations described herein (e.g., in connection with FIGS. 1-6).

In at least one embodiment, an interface is software instructions that, if executed, provide access to one or more of the function(s) 712 provided by one or more of the API(s) 710. In at least one embodiment, one or more of the software program(s) 702 use(s) a local interface when a software developer compiles one or more of the software program(s) 702 in conjunction with one or more of the library(ies) 706 including or otherwise providing access to one or more of the API(s) 710. In at least one embodiment, one or more of the software program(s) 702 is/are compiled statically in conjunction with one or more pre-compiled ones of the library(ies) 706 and/or uncompiled source code including instructions to perform one or more of the API(s) 710. In at least one embodiment, one or more of the software program(s) 702 are compiled dynamically and the dynamically compiled software program(s) utilize a linker to link to one or more pre-compiled ones of the library(ies) 706, including one or more of the API(s) 710.

In at least one embodiment, one or more of the software program(s) 702 use(s) a remote interface when a software developer executes a software program that utilizes or otherwise communicates with at least one of the library(ies) 706 including one or more of the API(s) 710 over a network or other remote communication medium. In at least one embodiment, one or more of the library(ies) 706 including one or more of the API(s) 710 are to be performed by a remote computing service, such as a computing resource services provider. In at least one embodiment, one or more of the library(ies) 706 including one or more particular APIs (of the API(s) 710) is/are to be performed by any other computing host providing the particular API(s) to one or more of the software program(s) 702.

In at least one embodiment, a processor (e.g., processor(s) 722 illustrated in FIG. 7B) performing or using one or more particular ones of the software program(s) 702 calls, uses, performs, and/or otherwise implements one or more of the API(s) 710 to allocate and otherwise manage memory 714 to be used by the particular software program(s). In at least one embodiment, one or more particular ones of the software program(s) 702 utilize one or more of the API(s) 710 to allocate and otherwise manage the memory 714 to be used by one or more portions of the particular software program(s) to be accelerated using one or more PPUs, such as GPUs, or any other accelerator or processor further described herein. In at least one embodiment, one or more of the software program(s) 702 request one or more neural networks to perform signal processing using one or more of the function(s) 712 provided by one or more of the API(s) 710. In at least one embodiment, memory 130 implements memory 714.

In at least one embodiment, one or more of the API(s) 710 is an API to facilitate parallel computing. In at least one embodiment, one or more of the API(s) 710 is any other API further described herein. In at least one embodiment, one or more of the API(s) 710 is/are provided by one or more of the driver(s) 704 and/or one or more of the runtime(s) 704. In at least one embodiment, one or more of the API(s) 710 is/are provided by a CUDA user-mode driver. In at least one embodiment, one or more of the API(s) 710 is/are provided by a CUDA runtime. In at least one embodiment, one or more of the driver(s) 704 is/are data values and software instructions that, if executed, perform and/or otherwise facilitate operation of one or more of the function(s) 712 of one or more of the API(s) 710 during load and execution of one or more portions of at least one of the software program(s) 702. In at least one embodiment, one or more of the runtime(s) 704 is/are data values and/or software instructions that, if executed, perform or otherwise facilitate operation of one or more of the function(s) 712 of one or more of the API(s) 710 during execution of at least one of the software program(s) 702. In at least one embodiment, one or more particular ones of the software program(s) 702 utilize one or more of the API(s) 710 implemented and/or otherwise provided by one or more of the driver(s) 704 and/or one or more of the runtime(s) 704 to perform combined arithmetic operations by the particular software program(s) during execution by one or more PPUs, such as GPUs.

In at least one embodiment, one or more of the software program(s) 702 utilize one or more of the API(s) 710 provided by one or more of the driver(s) 704 and/or one or more of the runtime(s) 704 to perform combined arithmetic operations of one or more PPUs, such as GPUs. In at least one embodiment, one or more of the API(s) 710 provide combined arithmetic operations through one or more of the driver(s) 704 and/or one or more of the runtime(s) 704, as described above. In at least one embodiment, one or more of the software program(s) 702 utilize one or more of the API(s) 710 provided by one or more of the driver(s) 704 and/or one or more of the runtime(s) 704 to allocate or otherwise reserve one or more blocks of the memory 714 of one or more PPUs, such as GPUs. In at least one embodiment, one or more of the software program(s) 702 utilize one or more of the API(s) 710 provided by one or more of the driver(s) 704 and/or one or more of the runtime(s) 704 to allocate or otherwise reserve blocks of the memory 714.

In at least one embodiment, to improve usability of one or more particular ones of the software program(s) 702 and/or improve performance, one or more portions of the particular software programs are to be accelerated by one or more PPUs (such as GPUs). In at least one embodiment, one or more of the function(s) 712 receive one or more input parameters indicating one or more inputs to one or more neural networks and/or other data to be utilized by the neural network(s), such as one or more hyperparameters of the neural network(s). In at least one embodiment, the input parameter(s) include the one or more inputs and/or the other data. In at least one embodiment, the input parameter(s) include one or more pointers to one or more memory locations where the input(s) and/or the other data is/are stored.

In at least one embodiment, the system 700 includes at least one processor (e.g., processor(s) 722 illustrated in FIG. 7B) including one or more circuits to perform one or more software programs to combine two or more of the API(s) 710 into a single API. In at least one embodiment, the system 700 includes at least one processor (e.g., processor(s) 722 illustrated in FIG. 7B) that uses one or more of the API(s) 710 to implement topology analysis functions and to implement network graph functions, and/or otherwise perform operations described herein. In at least one embodiment, the system 700 includes at least one processor (e.g., processor(s) 722 illustrated in FIG. 7B) that uses one or more of the API(s) 710 to perform one or more operations illustrated in and/or described with respect to one or more of FIGS. 1-6, such as one or more processes illustrated in FIGS. 1-6 or portion(s) thereof. In at least one embodiment, the system 700 includes at least one processor (e.g., processor(s) 722 illustrated in FIG. 7B) to perform one or more of the function(s) 712, such as those described in connection with FIGS. 1-6. In at least one embodiment, one or more of the API(s) 710 is to be performed by hardware described in connection with FIGS. 7B-10.

FIG. 7B is block diagram 720 illustrating example processor(s) 722 and the module(s) 724, according to at least one embodiment. Referring to FIG. 7B, in at least one embodiment, the processor(s) 722 may be implemented by the processor(s) 132 in one or more of the network devices 101 of FIG. 1. In at least one embodiment, the processor(s) 722 may perform one or more processes such as those described herein with respect to one or more of the network devices 101, and/or may otherwise perform operations described herein. In at least one embodiment, the processor(s) 722 perform(s) one or more processes such as those described in connection with FIGS. 1-6.

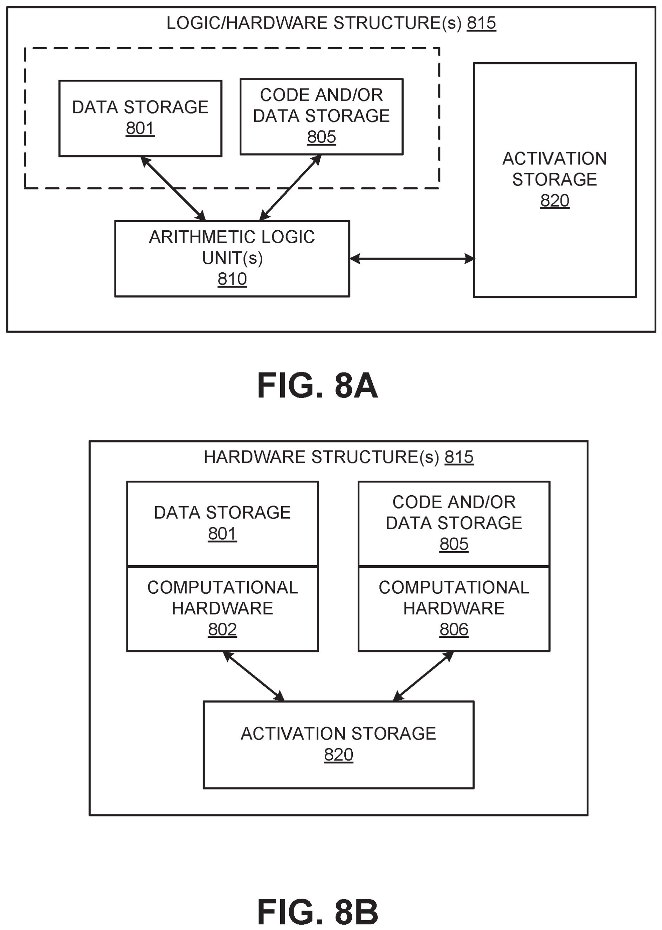

In at least one embodiment, the processor(s) 722 include one or more processors such as those described in connection with FIGS. 8-10. In at least one embodiment, processor(s) 722 may be any suitable processing unit and/or combination of processing units, such as one or more CPUs, GPUs, DPUs, GPGPUs, PPUs, and/or variations thereof. The processor(s) 722 includes the module(s) 724, which may include a topology analysis module 726 and a network graph module 728. The topology analysis module 726 may store the topology analysis functionality 140 and/or include any machine executable instructions that if performed by the processor(s) 722 perform the topology analysis functionality 140. The network graph module 728 may include any machine executable instructions that if performed by the processor(s) 722 generate the network graph 150. The module(s) 724 may be distributed among multiple processors that communicate over a bus, network, by writing to shared memory, and/or any suitable communication process such as those described herein. In at least one embodiment, the module(s) 724 may include processor executable instructions that implement the topology analysis functionality 140 and/or generate the network graph 150 described with respect to FIGS. 1-6.

As used in any implementation described herein, unless otherwise clear from context or stated explicitly to contrary, a module refers to any combination of software logic, firmware logic, hardware logic, and/or circuitry configured to provide functionality described herein. Software may be embodied as a software package, code and/or instruction set or instructions, and "hardware," as used in any implementation described herein, may include, for example, singly or in any combination, hardwired circuitry, programmable circuitry, state machine circuitry, fixed function circuitry, execution unit circuitry, and/or firmware that stores instructions executed by programmable circuitry. Modules may, collectively or individually, be embodied as circuitry that forms part of a larger system, for example, an integrated circuit (IC), system on-chip (SoC), and so forth. a module performs one or more processes in connection with any suitable processing unit and/or combination of processing units, such as one or more CPUs, GPUs, GPGPUs, DPUs, PPUs, and/or variations thereof.

In at least one embodiment, as used in any implementation described herein, unless otherwise clear from context or stated explicitly to contrary, terms such as "module" and nominalized verbs (e.g., image manager, image analyzer, analytics engine, controller, and/or other terms) each refers to any combination of software logic, firmware logic, hardware logic, and/or circuitry configured to provide functionality described herein. In at least one embodiment, software may be embodied as a software package, code and/or instruction set or instructions, and "hardware," as used in any implementation described herein, may include, for example, singly or in any combination, hardwired circuitry, programmable circuitry, state machine circuitry, fixed function circuitry, execution unit circuitry, and/or firmware that stores instructions executed by programmable circuitry. In at least one embodiment, modules may, collectively or individually, be embodied as circuitry that forms part of a larger system, for example, an integrated circuit (IC), system on-chip (SoC), and so forth.

### LOGIC

FIG. 8A illustrates logic 815 which, as described elsewhere herein, can be used in one or more devices to perform operations such as those discussed herein in accordance with at least one embodiment. In at least one embodiment, logic 815 is used to perform inferencing and/or training operations associated with one or more embodiments. In at least one embodiment, logic 815 is inference and/or training logic. Details regarding logic 815 are provided below in conjunction with FIGS. 8A and/or 8B. In at least one embodiment, logic refers to any combination of software logic, hardware logic, and/or firmware logic to provide functionality or operations described herein, wherein logic may be, collectively or individually, embodied as circuitry that forms part of a larger system, for example, an integrated circuit (IC), system-on-chip (SoC), or one or processors (e.g., CPU, GPU).

In at least one embodiment, logic 815 may include, without limitation, code and/or data storage 801 to store forward and/or output weight and/or input/output data, and/or other parameters to configure neurons or layers of a neural network trained and/or used for inferencing in aspects of one or more embodiments. In at least one embodiment, logic 815 may include, or be coupled to code and/or data storage 801 to store graph code or other software to control timing and/or order, in which weight and/or other parameter information is to be loaded to configure, logic, including integer and/or floating point units (collectively, arithmetic logic units (ALUs)). In at least one embodiment, code, such as graph code, loads weight or other parameter information into processor ALUs based on an architecture of a neural network to which such code corresponds. In at least one embodiment, code and/or data storage 801 stores weight parameters and/or input/output data of each layer of a neural network trained or used in conjunction with one or more embodiments during forward propagation of input/output data and/or weight parameters during training and/or inferencing using aspects of one or more embodiments. In at least one embodiment, any portion of code and/or data storage 801 may be included with other on-chip or off-chip data storage, including a processor's L1, L2, or L3 cache or system memory.

In at least one embodiment, any portion of code and/or data storage 801 may be internal or external to one or more processors or other hardware logic devices or circuits. In at least one embodiment, code and/or code and/or data storage 801 may be cache memory, dynamic randomly addressable memory ("DRAM"), static randomly addressable memory ("SRAM"), non-volatile memory (e.g., flash memory), or other storage. In at least one embodiment, a choice of whether code and/or code and/or data storage 801 is internal or external to a processor, for example, or including DRAM, SRAM, flash or some other storage type may depend on available storage on-chip versus off-chip, latency requirements of training and/or inferencing functions being performed, batch size of data used in inferencing and/or training of a neural network, or some combination of these factors.

In at least one embodiment, logic 815 may include, without limitation, a code and/or data storage 805 to store backward and/or output weight and/or input/output data corresponding to neurons or layers of a neural network trained and/or used for inferencing in aspects of one or more embodiments. In at least one embodiment, code and/or data storage 805 stores weight parameters and/or input/output data of each layer of a neural network trained or used in conjunction with one or more embodiments during backward propagation of input/output data and/or weight parameters during training and/or inferencing using aspects of one or more embodiments. In at least one embodiment, logic 815 may include, or be coupled to code and/or data storage 805 to store graph code or other software to control timing and/or order, in which weight and/or other parameter information is to be loaded to configure, logic, including integer and/or floating point units (collectively, arithmetic logic units (ALUs)).

In at least one embodiment, code, such as graph code, causes the loading of weight or other parameter information into processor ALUs based on an architecture of a neural network to which such code corresponds. In at least one embodiment, any portion of code and/or data storage 805 may be included with other on-chip or off-chip data storage, including a processor's L1, L2, or L3 cache or system memory. In at least one embodiment, any portion of code and/or data storage 805 may be internal or external to one or more processors or other hardware logic devices or circuits. In at least one embodiment, code and/or data storage 805 may be cache memory, DRAM, SRAM, non-volatile memory (e.g., flash memory), or other storage. In at least one embodiment, a choice of whether code and/or data storage 805 is internal or external to a processor, for example, or including DRAM, SRAM, flash memory or some other storage type may depend on available storage on-chip versus off-chip, latency requirements of training and/or inferencing functions being performed, batch size of data used in inferencing and/or training of a neural network, or some combination of these factors.

In at least one embodiment, code and/or data storage 801 and code and/or data storage 805 may be separate storage structures. In at least one embodiment, code and/or data storage 801 and code and/or data storage 805 may be a combined storage structure. In at least one embodiment, code and/or data storage 801 and code and/or data storage 805 may be partially combined and partially separate. In at least one embodiment, any portion of code and/or data storage 801 and code and/or data storage 805 may be included with other on-chip or off-chip data storage, including a processor's L1, L2, or L3 cache or system memory.

In at least one embodiment, logic 815 may include, without limitation, one or more arithmetic logic unit(s) ("ALU(s)") 810, including integer and/or floating point units, to perform logical and/or mathematical operations based, at least in part on, or indicated by, training and/or inference code (e.g., graph code), a result of which may produce activations (e.g., output values from layers or neurons within a neural network) stored in an activation storage 820 that are functions of input/output and/or weight parameter data stored in code and/or data storage 801 and/or code and/or data storage 805. In at least one embodiment, activations stored in activation storage 820 are generated according to linear algebraic and or matrix-based mathematics performed by ALU(s) 810 in response to performing instructions or other code, wherein weight values stored in code and/or data storage 805 and/or data storage 801 are used as operands along with other values, such as bias values, gradient information, momentum values, or other parameters or hyperparameters, any or all of which may be stored in code and/or data storage 805 or code and/or data storage 801 or another storage on or off-chip.

In at least one embodiment, ALU(s) 810 are included within one or more processors or other hardware logic devices or circuits, whereas in another embodiment, ALU(s) 810 may be external to a processor or other hardware logic device or circuit that uses them (e.g., a co-processor). In at least one embodiment, ALUs 810 may be included within a processor's execution units or otherwise within a bank of ALUs accessible by a processor's execution units either within same processor or distributed between different processors of different types (e.g., central processing units, graphics processing units, fixed function units, etc.). In at least one embodiment, code and/or data storage 801, code and/or data storage 805, and activation storage 820 may share a processor or other hardware logic device or circuit, whereas in another embodiment, they may be in different processors or other hardware logic devices or circuits, or some combination of same and different processors or other hardware logic devices or circuits. In at least one embodiment, any portion of activation storage 820 may be included with other on-chip or off-chip data storage, including a processor's L1, L2, or L3 cache or system memory. Furthermore, inferencing and/or training code may be stored with other code accessible to a processor or other hardware logic or circuit and fetched and/or processed using a processor's fetch, decode, scheduling, execution, retirement and/or other logical circuits.

In at least one embodiment, activation storage 820 may be cache memory, DRAM, SRAM, non-volatile memory (e.g., flash memory), or other storage. In at least one embodiment, activation storage 820 may be completely or partially within or external to one or more processors or other logical circuits. In at least one embodiment, a choice of whether activation storage 820 is internal or external to a processor, for example, or including DRAM, SRAM, flash memory or some other storage type may depend on available storage on-chip versus off-chip, latency requirements of training and/or inferencing functions being performed, batch size of data used in inferencing and/or training of a neural network, or some combination of these factors.

In at least one embodiment, logic 815 illustrated in FIG. 8A may be used in conjunction with an application-specific integrated circuit ("ASIC"), such as a TensorFlow^{®} Processing Unit from Google, an inference processing unit (IPU) from Graphcore^{™}, or a Nervana^{®} (e.g., "Lake Crest") processor from Intel Corp. In at least one embodiment, logic 815 illustrated in FIG. 8A may be used in conjunction with central processing unit ("CPU") hardware, graphics processing unit ("GPU") hardware or other hardware, such as field programmable gate arrays ("FPGAs").

FIG. 8B illustrates logic 815, according to at least one embodiment. In at least one embodiment, logic 815 is inference and/or training logic. In at least one embodiment, logic 815 may include, without limitation, hardware logic in which computational resources are dedicated or otherwise exclusively used in conjunction with weight values or other information corresponding to one or more layers of neurons within a neural network. In at least one embodiment, logic 815 illustrated in FIG. 8B may be used in conjunction with an application-specific integrated circuit (ASIC), such as TensorFlow^{®} Processing Unit from Google, an inference processing unit (IPU) from Graphcore^{™}, or a Nervana^{®} (e.g., "Lake Crest") processor from Intel Corp. In at least one embodiment, logic 815 illustrated in FIG. 8B may be used in conjunction with central processing unit (CPU) hardware, graphics processing unit (GPU) hardware or other hardware, such as field programmable gate arrays (FPGAs). In at least one embodiment, logic 815 includes, without limitation, code and/or data storage 801 and code and/or data storage 805, which may be used to store code (e.g., graph code), weight values and/or other information, including bias values, gradient information, momentum values, and/or other parameter or hyperparameter information. In at least one embodiment illustrated in FIG. 8B, each of code and/or data storage 801 and code and/or data storage 805 is associated with a dedicated computational resource, such as computational hardware 802 and computational hardware 806, respectively. In at least one embodiment, each of computational hardware 802 and computational hardware 806 includes one or more ALUs that perform mathematical functions, such as linear algebraic functions, only on information stored in code and/or data storage 801 and code and/or data storage 805, respectively, result of which is stored in activation storage 820.

In at least one embodiment, each of code and/or data storage 801 and 805 and corresponding computational hardware 802 and 806, respectively, correspond to different layers of a neural network, such that resulting activation from one storage/computational pair 801/802 of code and/or data storage 801 and computational hardware 802 is provided as an input to a next storage/computational pair 805/806 of code and/or data storage 805 and computational hardware 806, in order to mirror a conceptual organization of a neural network. In at least one embodiment, each of storage/computational pairs 801/802 and 805/806 may correspond to more than one neural network layer. In at least one embodiment, additional storage/computation pairs (not shown) subsequent to or in parallel with storage/computation pairs 801/802 and 805/806 may be included in logic 815.

The logic/hardware structures 815 may be implemented by elements of FIG. 1, such as the logic/hardware structures described with respect to one or more of the network devices 101. In at least one embodiment, one or more of the network devices 101 include(s) the processor(s) 132 that execute software instructions stored in the memory 130 in FIG. 1. The code and data storage 805 may store software the implements the topology analysis functions 140 and/or generates the network graph 150 in FIG. 1. Similarly, the storage/computational pairs 801/802 and 805/806 in FIG. 8 may correspond to processing components in FIG. 1, such as at least one of the computing devices 103 or other network devices 101 that include computational hardware, such as the processor(s) 132 and/or the memory 130.

### DATA CENTER

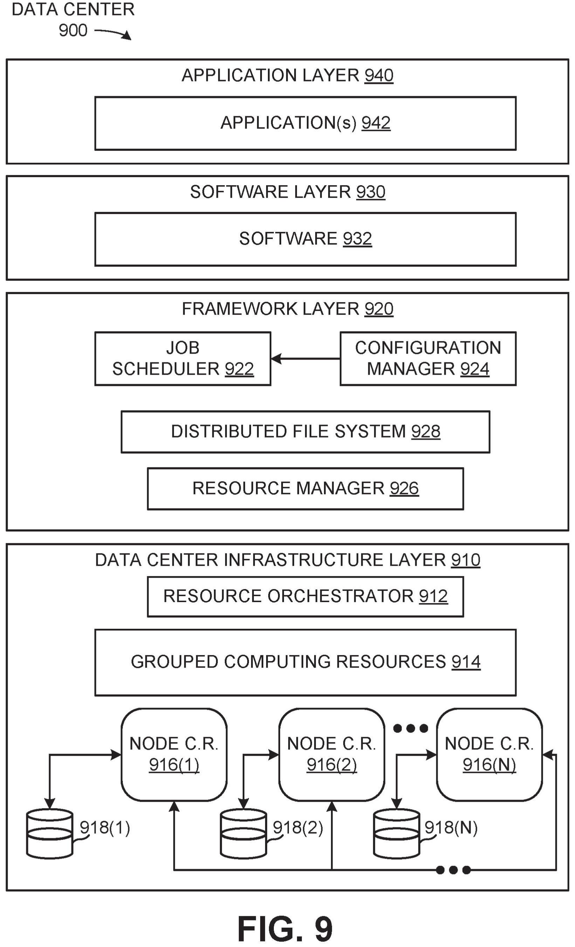

FIG. 9 illustrates an example data center 900, in which at least one embodiment may be used. In at least one embodiment, data center 900 includes a data center infrastructure layer 910, a framework layer 920, a software layer 930 and an application layer 940.

In at least one embodiment, as shown in FIG. 9, data center infrastructure layer 910 may include a resource orchestrator 912, grouped computing resources 914, and node computing resources ("node C.R.s") 916(1)-916(N), where "N" represents a positive integer (which may be a different integer "N" than used in other figures). In at least one embodiment, node C.R.s 916(1)-916(N) may include, but are not limited to, any number of central processing units ("CPUs") or other processors (including accelerators, field programmable gate arrays (FPGAs), graphics processors, etc.), memory storage devices 918(1)-918(N) (e.g., dynamic read-only memory, solid state storage or disk drives), network input/output ("NW I/O") devices, network switches, virtual machines ("VMs"), power modules, and cooling modules, etc. In at least one embodiment, one or more node C.R.s from among node C.R.s 916(1)-916(N) may be a server having one or more of above-mentioned computing resources.

In at least one embodiment, grouped computing resources 914 may include separate groupings of node C.R.s housed within one or more racks (not shown), or many racks housed in data centers at various geographical locations (also not shown). In at least one embodiment, separate groupings of node C.R.s within grouped computing resources 914 may include grouped compute, network, memory or storage resources that may be configured or allocated to support one or more workloads. In at least one embodiment, several node C.R.s including CPUs or processors may be grouped within one or more racks to provide compute resources to support one or more workloads. In at least one embodiment, one or more racks may also include any number of power modules, cooling modules, and network switches, in any combination.

In at least one embodiment, resource orchestrator 912 may configure or otherwise control one or more node C.R.s 916(1)-916(N) and/or grouped computing resources 914. In at least one embodiment, resource orchestrator 912 may include a software design infrastructure ("SDI") management entity for data center 900. In at least one embodiment, resource orchestrator 912 may include hardware, software or some combination thereof.

In at least one embodiment, as shown in FIG. 9, framework layer 920 includes a job scheduler 922, a configuration manager 924, a resource manager 926 and a distributed file system 928. In at least one embodiment, framework layer 920 may include a framework to support software 932 of software layer 930 and/or one or more application(s) 942 of application layer 940. In at least one embodiment, software 932 or application(s) 942 may respectively include web-based service software or applications, such as those provided by Amazon Web Services, Google Cloud and Microsoft Azure. In at least one embodiment, framework layer 920 may be, but is not limited to, a type of free and open-source software web application framework such as Apache Spark^{™} (hereinafter "Spark") that may utilize distributed file system 928 for large-scale data processing (e.g., "big data"). In at least one embodiment, job scheduler 922 may include a Spark driver to facilitate scheduling of workloads supported by various layers of data center 900. In at least one embodiment, configuration manager 924 may be capable of configuring different layers such as software layer 930 and framework layer 920 including Spark and distributed file system 928 for supporting large-scale data processing. In at least one embodiment, resource manager 926 may be capable of managing clustered or grouped computing resources mapped to or allocated for support of distributed file system 928 and job scheduler 922. In at least one embodiment, clustered or grouped computing resources may include grouped computing resources 914 at data center infrastructure layer 910. In at least one embodiment, resource manager 926 may coordinate with resource orchestrator 912 to manage these mapped or allocated computing resources.

In at least one embodiment, software 932 included in software layer 930 may include software used by at least portions of node C.R.s 916(1)-916(N), grouped computing resources 914, and/or distributed file system 928 of framework layer 920. In at least one embodiment, one or more types of software may include, but are not limited to, Internet web page search software, email virus scan software, database software, and streaming video content software.

In at least one embodiment, application(s) 942 included in application layer 940 may include one or more types of applications used by at least portions of node C.R.s 916(1)-916(N), grouped computing resources 914, and/or distributed file system 928 of framework layer 920. In at least one embodiment, one or more types of applications may include, but are not limited to, any number of a genomics application, a cognitive compute, application and a machine learning application, including training or inferencing software, machine learning framework software (e.g., PyTorch, TensorFlow, Caffe, etc.) or other machine learning applications used in conjunction with one or more embodiments.

In at least one embodiment, any of configuration manager 924, resource manager 926, and resource orchestrator 912 may implement any number and type of self-modifying actions based on any amount and type of data acquired in any technically feasible fashion. In at least one embodiment, self-modifying actions may relieve a data center operator of data center 900 from making possibly bad configuration decisions and possibly avoiding underutilized and/or poor performing portions of a data center.

In at least one embodiment, data center 900 may include tools, services, software or other resources to train one or more machine learning models or predict or infer information using one or more machine learning models according to one or more embodiments described herein. For example, in at least one embodiment, a machine learning model may be trained by calculating weight parameters according to a neural network architecture using software and computing resources described above with respect to data center 900. In at least one embodiment, trained machine learning models corresponding to one or more neural networks may be used to infer or predict information using resources described above with respect to data center 900 by using weight parameters calculated through one or more training techniques described herein.

In at least one embodiment, data center 900 may use CPUs, application-specific integrated circuits (ASICs), GPUs, FPGAs, or other hardware to perform training and/or inferencing using above-described resources. Moreover, one or more software and/or hardware resources described above may be configured as a service to allow users to train or performing inferencing of information, such as image recognition, speech recognition, or other artificial intelligence services.

Logic 815 are used to perform inferencing and/or training operations associated with one or more embodiments. Details regarding logic 815 are provided herein in conjunction with FIG. 8A and/or FIG. 8B. In at least one embodiment, logic 815 may be used in data center 900 for inferencing or predicting operations based, at least in part, on weight parameters calculated using neural network training operations, neural network functions and/or architectures, or neural network use cases described herein.

As described above with respect to FIGS. 1-6, a computer system, such as the computer system 100 or the data center 900 include many processing components coupled together by a number of interconnection components, such as such as switches, routers, hubs, repeaters, bridges, gateways, and/or firewalls, that route data traffic on the network to and from one or more of the computing devices (e.g., the network devices 101). The system and method described with respect to FIGS. 1-6 provides techniques for analyzing the network topology of the computer system (e.g., the computer system 100 or the data center 900) to predict link connections and detect anomalies in the network topology based on the predictions. The application layer 940 may include application(s) 9042, such as the topology analysis functionality 140 and/or one or more applications to generate the network graph 150 of FIG. 1. One or more of the network devices 101 (e.g., one or more of the computing devices 103) of FIG. 1 may be implemented by a node C.R., such as any of the nodes C.R. 916(1) - C.R. 916(N).

### COMPUTER SYSTEMS

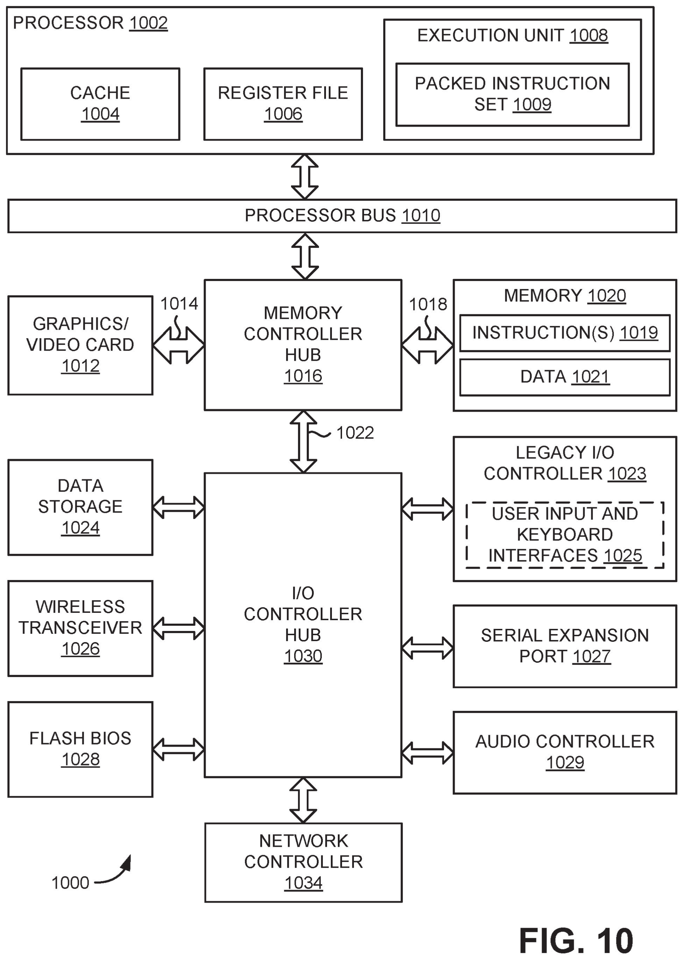

FIG. 10 is a block diagram illustrating an exemplary computer system, which may be a system with interconnected devices and components, a system-on-a-chip (SOC) or some combination thereof formed with a processor that may include execution units to execute an instruction, according to at least one embodiment. In at least one embodiment, a computer system 1000 may include, without limitation, a component, such as a processor 1002 to employ execution units including logic to perform algorithms for process data, in accordance with present disclosure, such as in embodiment described herein. In at least one embodiment, computer system 1000 may include processors, such as PENTIUM^{®} Processor family, Xeon^{™}, Itanium^{®}, XScale^{™} and/or StrongARM^{™}, Intel^{®} Core^{™}, or Intel^{®} Nervana^{™} microprocessors available from Intel Corporation of Santa Clara, California, although other systems (including PCs having other microprocessors, engineering workstations, set-top boxes and like) may also be used. In at least one embodiment, computer system 1000 may execute a version of WINDOWS operating system available from Microsoft Corporation of Redmond, Wash., although other operating systems (UNIX and Linux, for example), embedded software, and/or graphical user interfaces, may also be used.

Embodiments may be used in other devices such as handheld devices and embedded applications. Some examples of handheld devices include cellular phones, Internet Protocol devices, digital cameras, personal digital assistants ("PDAs"), and handheld PCs. In at least one embodiment, embedded applications may include a microcontroller, a digital signal processor ("DSP"), system on a chip, network computers ("NetPCs"), set-top boxes, network hubs, wide area network ("WAN") switches, or any other system that may perform one or more instructions in accordance with at least one embodiment.

In at least one embodiment, computer system 1000 may include, without limitation, processor 1002 that may include, without limitation, one or more execution units 1008 to perform machine learning model training and/or inferencing according to techniques described herein. In at least one embodiment, computer system 1000 is a single processor desktop or server system, but in another embodiment, computer system 1000 may be a multiprocessor system. In at least one embodiment, processor 1002 may include, without limitation, a complex instruction set computer ("CISC") microprocessor, a reduced instruction set computing ("RISC") microprocessor, a very long instruction word ("VLIW") microprocessor, a processor implementing a combination of instruction sets, or any other processor device, such as a digital signal processor, for example. In at least one embodiment, processor 1002 may be coupled to a processor bus 1010 that may transmit data signals between processor 1002 and other components in computer system 1000.

In at least one embodiment, processor 1002 may include, without limitation, a Level 1 ("L1") internal cache memory ("cache") 1004. In at least one embodiment, processor 1002 may have a single internal cache or multiple levels of internal cache. In at least one embodiment, cache memory may reside external to processor 1002. Other embodiments may also include a combination of both internal and external caches depending on particular implementation and needs. In at least one embodiment, a register file 1006 may store different types of data in various registers including, without limitation, integer registers, floating point registers, status registers, and an instruction pointer register.

In at least one embodiment, execution unit 1008, including, without limitation, logic to perform integer and floating point operations, also resides in processor 1002. In at least one embodiment, processor 1002 may also include a microcode ("ucode") read only memory ("ROM") that stores microcode for certain macro instructions. In at least one embodiment, execution unit 1008 may include logic to handle a packed instruction set 1009. In at least one embodiment, by including packed instruction set 1009 in an instruction set of a general-purpose processor, along with associated circuitry to execute instructions, operations used by many multimedia applications may be performed using packed data in processor 1002. In at least one embodiment, many multimedia applications may be accelerated and executed more efficiently by using a full width of a processor's data bus for performing operations on packed data, which may eliminate a need to transfer smaller units of data across that processor's data bus to perform one or more operations one data element at a time.

In at least one embodiment, execution unit 1008 may also be used in microcontrollers, embedded processors, graphics devices, DSPs, and other types of logic circuits. In at least one embodiment, computer system 1000 may include, without limitation, a memory 1020. In at least one embodiment, memory 1020 may be a Dynamic Random Access Memory ("DRAM") device, a Static Random Access Memory ("SRAM") device, a flash memory device, or another memory device. In at least one embodiment, memory 1020 may store instruction(s) 1019 and/or data 1021 represented by data signals that may be executed by processor 1002.

In at least one embodiment, a system logic chip may be coupled to processor bus 1010 and memory 1020. In at least one embodiment, a system logic chip may include, without limitation, a memory controller hub ("MCH") 1016, and processor 1002 may communicate with MCH 1016 via processor bus 1010. In at least one embodiment, MCH 1016 may provide a high bandwidth memory path 1018 to memory 1020 for instruction and data storage and for storage of graphics commands, data and textures. In at least one embodiment, MCH 1016 may direct data signals between processor 1002, memory 1020, and other components in computer system 1000 and to bridge data signals between processor bus 1010, memory 1020, and a system I/O interface 1022. In at least one embodiment, a system logic chip may provide a graphics port for coupling to a graphics controller. In at least one embodiment, MCH 1016 may be coupled to memory 1020 through high bandwidth memory path 1018 and a graphics/video card 1012 may be coupled to MCH 1016 through an Accelerated Graphics Port ("AGP") interconnect 1014.

In at least one embodiment, computer system 1000 may use system I/O interface 1022 as a proprietary hub interface bus to couple MCH 1016 to an I/O controller hub ("ICH") 1030. In at least one embodiment, ICH 1030 may provide direct connections to some I/O devices via a local I/O bus. In at least one embodiment, a local I/O bus may include, without limitation, a high-speed I/O bus for connecting peripherals to memory 1020, a chipset, and processor 1002. Examples may include, without limitation, an audio controller 1029, a firmware hub ("flash BIOS") 1028, a wireless transceiver 1026, a data storage 1024, a legacy I/O controller 1023 containing user input and keyboard interfaces 1025, a serial expansion port 1027, such as a Universal Serial Bus ("USB") port, and a network controller 1034. In at least one embodiment, data storage 1024 may include a hard disk drive, a floppy disk drive, a CD-ROM device, a flash memory device, or other mass storage device.

In at least one embodiment, FIG. 10 illustrates a system, which includes interconnected hardware devices or "chips," whereas in other embodiments, FIG. 10 may illustrate an exemplary SoC. In at least one embodiment, devices illustrated in FIG. 10 may be interconnected with proprietary interconnects, standardized interconnects (e.g., PCIe) or some combination thereof. In at least one embodiment, one or more components of computer system 1000 are interconnected using compute express link (CXL) interconnects.

Logic 815 are used to perform inferencing and/or training operations associated with one or more embodiments. Details regarding logic 815 are provided herein in conjunction with FIG. 8A and/or FIG. 8B. In at least one embodiment, logic 815 may be used in computer system 1000 for inferencing or predicting operations based, at least in part, on weight parameters calculated using neural network training operations, neural network functions and/or architectures, or neural network use cases described herein.

The processor 1002 of FIG. 10 may be used to implement any of the network devices 101, such as one or more of the computing devices 103. The network controller 1034 in FIG. 10 is used by at least one of the network devices 101 to communicate with another of the network devices 101 (e.g., the computing device 103C), as illustrated in FIG. 1. The memory 1020 may implement the memory 130 in FIG. 1 and store instructions 1019 that implement functionality of modules n FIG. 1, such as the topology analysis functionality 140, and/or generate the network graph 150.

At least one embodiment of the disclosure can be described in view of the following clauses:
1. A processor comprising one or more circuits to at least divide a plurality of nodes of a graph representing a network into a plurality of subsets comprising a first subset, use a portion of the plurality of subsets not including the first subset to train a prediction model to predict connections between pairs of nodes in the first subset, use the trained model to generate a prediction of the connections between the pairs of nodes in the first subset, and use the prediction to identify a set of anomalies in the network.
2. The processor of clause 1, wherein the set of anomalies comprise at least one missing connection between one of the pairs of nodes in the first subset.
3. The processor of any of clauses 1 to 2, wherein the set of anomalies comprise at least one unnecessary connection between one of the pairs of nodes in the first subset.
4. The processor of any of clauses 1 to 3, wherein features of a portion of the plurality of nodes included in the portion of the plurality of subsets not including the first subset are utilized to train the prediction model.
5. The processor of clause 4, wherein the features of the portion of the plurality of nodes comprise node connections included in the portion of the plurality of subsets not including the first subset.
6. The processor of clause 4 or 5, wherein the features of the portion of the plurality of nodes comprise a name of each node in the portion of the plurality of nodes included in the portion of the plurality of subsets not including the first subset.
7. The processor of any of clauses 4-6, wherein the features of the portion of the plurality of nodes comprise semantic information related to the portion of the plurality of nodes included in the portion of the plurality of subsets not including the first subset.
8. The processor of any of clauses 1 to 7, wherein one or more circuits are to divide the plurality of nodes into a plurality of new subsets comprising a second subset, train a new model using a portion of the plurality of new subsets not including the second subset, use the trained new model to generate a new prediction of connections between pairs of nodes in the second subset, and use the new prediction to identify a new set of anomalies in the network.
9. The processor of any of clauses 1 to 8, wherein one or more circuits are to repeat at least until a set of criteria is satisfied, updating the graph to correct at least one of the set of anomalies, dividing the plurality of nodes of the updated graph into a plurality of new subsets comprising a second subset, training a new model using a portion of the plurality of new subsets not including the second subset, using the trained new model to generate a new prediction of connections between pairs of nodes in the second subset, and using the new prediction to reidentify the set of anomalies in the network.
10. The processor of any of clauses 1 to 9, wherein one or more circuits are to at least repeat, at least until a set of criteria is satisfied, causing the network to be modified based at least in part on the set of anomalies, obtaining an updated graph representing the modified network, dividing a plurality of nodes of the updated graph into a plurality of new subsets comprising a second subset, training a new model using a portion of the plurality of new subsets not including the second subset, using the trained new model to generate a new prediction of connections between pairs of nodes in the second subset, and using the new prediction to reidentify the set of anomalies in the modified network.
11. A data center comprising a plurality of network devices interconnected by a plurality of communication links to form a data center network, and a processor having one or more circuits to at least divide a plurality of nodes of a graph representing the data center network into a plurality of subsets comprising a first subset, use a portion of the plurality of subsets not including the first subset to train a prediction model to predict connections between pairs of nodes in the first subset, use the trained model to generate a prediction of the connections between the pairs of nodes in the first subset, and use the prediction to identify a set of anomalies in the first subset.
12. The data center of clause 11, wherein one or more circuits are to divide the plurality of nodes into a plurality of new subsets comprising a second subset, train a new model using a portion of the plurality of new subsets not including the second subset, use the trained new model to generate a new prediction of connections between pairs of nodes in the second subset, and use the new prediction to identify a new set of anomalies in the second subset.
13. The data center of any of clauses 11 to 12, wherein one or more circuits are to divide a plurality of nodes into a plurality of new subsets comprising a second subset that does not include any nodes in the first subset, train a new model using a portion of the plurality of new subsets not including the second subset, use the trained new model to generate a new prediction of connections between pairs of nodes in the second subset, use the new prediction to identify a new set of anomalies in the second subset, and repeat, at least until a trained new model has generated a new prediction of connections between all pairs of nodes in the data center network.
14. The data center of any of clauses 11 to 13, wherein features of the plurality of nodes included in the portion of the plurality of subsets not including the first subset are utilized to train the prediction model.
15. The data center of clause 14, wherein the features of the plurality of nodes comprises at least one of a set of features comprising node connections within the portion of the plurality of subsets not including the first subset, a name of a portion of the plurality of nodes included in the portion of the plurality of subsets not including the first subset, and semantic information related to the portion of the plurality of nodes included in the portion of the plurality of subsets not including the first subset.
16. A method comprising obtaining a plurality of subsets, each subset in the plurality of subsets comprising a portion of a plurality of nodes of a graph representing a network, and performing at least one iteration until a set of criteria is satisfied, each iteration comprising training a model using a portion of the plurality of subsets not including a particular subset, using the trained model to generate predictions of connections between pairs of nodes in the particular subset, using the predictions to identify a set of anomalies in the network, obtaining an updated graph based at least in part on the set of anomalies, and obtaining the plurality of subsets based at least in part on the updated graph.
17. The method of clause 16, wherein, within each iteration, the set of anomalies comprise at least one of a missing connection between one of the pairs of nodes in the particular subset or an unnecessary connection between one of the pairs of nodes in the particular subset.
18. The method of any of clauses 16 to 17, wherein performing one or more of the at least one iteration further comprises correcting at least one of the set of anomalies in the network, and the updated graph is obtained based at least in part on the network after the at least one anomaly has been corrected.
19. The method of any of clauses 16 to 18, wherein features of the plurality of nodes represented by the graph of the plurality of subsets not including the particular subset are utilized to train the model.
20. The method of clause 19, wherein the features of the plurality of nodes comprises at least one of a set of features comprising node connections represented by the graph of the plurality of subsets not including the particular subset, a name of the nodes represented by the graph of the plurality of subsets not including the particular subset, and semantic information related to the nodes represented by the graph of the plurality of subsets not including the particular subset.

In at least one embodiment, a single semiconductor platform may refer to a sole unitary semiconductor-based integrated circuit or chip. In at least one embodiment, multi-chip modules may be used with increased connectivity which simulate on-chip operation, and make substantial improvements over utilizing a conventional central processing unit ("CPU") and bus implementation. In at least one embodiment, various modules may also be situated separately or in various combinations of semiconductor platforms per desires of user.

In at least one embodiment, computer programs in form of machine-readable executable code or computer control logic algorithms are stored in main memory and/or secondary storage such as those described herein. Computer programs, if executed by one or more processors, enable at least one system described herein to perform various functions in accordance with at least one embodiment. In at least one embodiment, memory, storage, and/or any other storage are possible examples of computer-readable media. In at least one embodiment, secondary storage may refer to any suitable storage device or system such as a hard disk drive and/or a removable storage drive, representing a floppy disk drive, a magnetic tape drive, a compact disk drive, digital versatile disk ("DVD") drive, recording device, universal serial bus ("USB") flash memory, etc. In at least one embodiment, architecture and/or functionality of various previous figures are implemented in context of a CPU such as those described herein, a parallel processing system such as those described herein, an integrated circuit capable of at least a portion of capabilities of both the CPU, the parallel processing system, a chipset (e.g., a group of integrated circuits designed to work and sold as a unit for performing related functions, etc.), and/or any suitable combination of integrated circuit(s).

In at least one embodiment, architecture and/or functionality of various previous figures are implemented in context of a general computer system, a circuit board system, a game console system dedicated for entertainment purposes, an application-specific system, and more. In at least one embodiment, a computer system described herein may take form of a desktop computer, a laptop computer, a tablet computer, servers, supercomputers, a smart-phone (e.g., a wireless, hand-held device), personal digital assistant ("PDA"), a digital camera, a vehicle, a head mounted display, a hand-held electronic device, a mobile phone device, a television, workstation, game consoles, embedded system, and/or any other type of logic. In at least one embodiment, a computer system includes or refers to any devices illustrated in any of the drawings and/or described herein.

In at least one embodiment, a parallel processing system includes, without limitation, a plurality of parallel processing units ("PPUs") and associated memories. In at least one embodiment, PPUs are connected to a host processor or other peripheral devices via an interconnect and a switch or multiplexer. In at least one embodiment, a parallel processing system distributes computational tasks across the PPUs, which can be parallelizable - for example, as part of distribution of computational tasks across multiple graphics processing unit ("GPU") thread blocks. In at least one embodiment, memory is shared and accessible (e.g., for read and/or write access) across some or all of the PPUs, although such shared memory may incur performance penalties relative to use of local memory and registers resident to a PPU. In at least one embodiment, operation of the PPUs is synchronized through use of a command such as __syncthreads(), wherein all threads in a block (e.g., executed across multiple PPUs) to reach a certain point of execution of code before proceeding.

In at least one embodiment, one or more techniques described herein utilize a oneAPI programming model. In at least one embodiment, a oneAPI programming model refers to a programming model for interacting with various compute accelerator architectures. In at least one embodiment, oneAPI refers to an application programming interface (API) designed to interact with various compute accelerator architectures. In at least one embodiment, a oneAPI programming model utilizes a DPC++ programming language. In at least one embodiment, a DPC++ programming language refers to a high-level language for data parallel programming productivity. In at least one embodiment, a DPC++ programming language is based at least in part on C and/or C++ programming languages. In at least one embodiment, a oneAPI programming model is a programming model such as those developed by Intel Corporation of Santa Clara, CA.

In at least one embodiment, oneAPI and/or oneAPI programming model is utilized to interact with various accelerator, GPU, processor, and/or variations thereof, architectures. In at least one embodiment, oneAPI includes a set of libraries that implement various functionalities. In at least one embodiment, oneAPI includes at least a oneAPI DPC++ library, a oneAPI math kernel library, a oneAPI data analytics library, a oneAPI deep neural network library, a oneAPI collective communications library, a oneAPI threading building blocks library, a oneAPI video processing library, and/or variations thereof.

In at least one embodiment, a oneAPI DPC++ library, also referred to as oneDPL, is a library that implements algorithms and functions to accelerate DPC++ kernel programming. In at least one embodiment, oneDPL implements one or more standard template library (STL) functions. In at least one embodiment, oneDPL implements one or more parallel STL functions. In at least one embodiment, oneDPL provides a set of library classes and functions such as parallel algorithms, iterators, function object classes, range-based API, and/or variations thereof. In at least one embodiment, oneDPL implements one or more classes and/or functions of a C++ standard library. In at least one embodiment, oneDPL implements one or more random number generator functions.

In at least one embodiment, a oneAPI math kernel library, also referred to as oneMKL, is a library that implements various optimized and parallelized routines for various mathematical functions and/or operations. In at least one embodiment, oneMKL implements one or more basic linear algebra subprograms (BLAS) and/or linear algebra package (LAPACK) dense linear algebra routines. In at least one embodiment, oneMKL implements one or more sparse BLAS linear algebra routines. In at least one embodiment, oneMKL implements one or more random number generators (RNGs). In at least one embodiment, oneMKL implements one or more vector mathematics (VM) routines for mathematical operations on vectors. In at least one embodiment, oneMKL implements one or more Fast Fourier Transform (FFT) functions.

In at least one embodiment, a oneAPI data analytics library, also referred to as oneDAL, is a library that implements various data analysis applications and distributed computations. In at least one embodiment, oneDAL implements various algorithms for preprocessing, transformation, analysis, modeling, validation, and decision making for data analytics, in batch, online, and distributed processing modes of computation. In at least one embodiment, oneDAL implements various C++ and/or Java APIs and various connectors to one or more data sources. In at least one embodiment, oneDAL implements DPC++ API extensions to a traditional C++ interface and enables GPU usage for various algorithms.

In at least one embodiment, a oneAPI deep neural network library, also referred to as oneDNN, is a library that implements various deep learning functions. In at least one embodiment, oneDNN implements various neural network, machine learning, and deep learning functions, algorithms, and/or variations thereof.

In at least one embodiment, a oneAPI collective communications library, also referred to as oneCCL, is a library that implements various applications for deep learning and machine learning workloads. In at least one embodiment, oneCCL is built upon lower-level communication middleware, such as message passing interface (MPI) and libfabrics. In at least one embodiment, oneCCL enables a set of deep learning specific optimizations, such as prioritization, persistent operations, out of order executions, and/or variations thereof. In at least one embodiment, oneCCL implements various CPU and GPU functions.

In at least one embodiment, a oneAPI threading building blocks library, also referred to as oneTBB, is a library that implements various parallelized processes for various applications. In at least one embodiment, oneTBB is utilized for task-based, shared parallel programming on a host. In at least one embodiment, oneTBB implements generic parallel algorithms. In at least one embodiment, oneTBB implements concurrent containers. In at least one embodiment, oneTBB implements a scalable memory allocator. In at least one embodiment, oneTBB implements a work-stealing task scheduler. In at least one embodiment, oneTBB implements low-level synchronization primitives. In at least one embodiment, oneTBB is compiler-independent and usable on various processors, such as GPUs, PPUs, CPUs, and/or variations thereof.

In at least one embodiment, a oneAPI video processing library, also referred to as oneVPL, is a library that is utilized for accelerating video processing in one or more applications. In at least one embodiment, oneVPL implements various video decoding, encoding, and processing functions. In at least one embodiment, oneVPL implements various functions for media pipelines on CPUs, GPUs, and other accelerators. In at least one embodiment, oneVPL implements device discovery and selection in media centric and video analytics workloads. In at least one embodiment, oneVPL implements API primitives for zero-copy buffer sharing.

In at least one embodiment, a oneAPI programming model utilizes a DPC++ programming language. In at least one embodiment, a DPC++ programming language is a programming language that includes, without limitation, functionally similar versions of CUDA mechanisms to define device code and distinguish between device code and host code. In at least one embodiment, a DPC++ programming language may include a subset of functionality of a CUDA programming language. In at least one embodiment, one or more CUDA programming model operations are performed using a oneAPI programming model using a DPC++ programming language.

In at least one embodiment, any application programming interface (API) described herein is compiled into one or more instructions, operations, or any other signal by a compiler, interpreter, or other software tool. In at least one embodiment, compilation includes generating one or more machine-executable instructions, operations, or other signals from source code. In at least one embodiment, an API compiled into one or more instructions, operations, or other signals, when performed, causes one or more processors, such as graphics processors, graphics cores, parallel processor, a CPU, or any other logic circuit further described herein to perform one or more computing operations.

It should be noted that, while example embodiments described herein may relate to a CUDA programming model, techniques described herein can be utilized with any suitable programming model, such HIP, oneAPI, and/or variations thereof.

Other variations are within spirit of present disclosure. Thus, while disclosed techniques are susceptible to various modifications and alternative constructions, certain illustrated embodiments thereof are shown in drawings and have been described above in detail. It should be understood, however, that there is no intention to limit disclosure to specific form or forms disclosed, but on contrary, intention is to cover all modifications, alternative constructions, and equivalents falling within spirit and scope of disclosure, as defined in appended claims.

Use of terms "a" and "an" and "the" and similar referents in context of describing disclosed embodiments (especially in context of following claims) are to be construed to cover both singular and plural, unless otherwise indicated herein or clearly contradicted by context, and not as a definition of a term. Terms "comprising," "having," "including," and "containing" are to be construed as open-ended terms (meaning "including, but not limited to,") unless otherwise noted. "Connected," when unmodified and referring to physical connections, is to be construed as partly or wholly contained within, attached to, or joined together, even if there is something intervening. Recitation of ranges of values herein are merely intended to serve as a shorthand method of referring individually to each separate value falling within range, unless otherwise indicated herein and each separate value is incorporated into specification as if it were individually recited herein. In at least one embodiment, use of term "set" (e.g., "a set of items") or "subset" unless otherwise noted or contradicted by context, is to be construed as a nonempty collection comprising one or more members. Further, unless otherwise noted or contradicted by context, term "subset" of a corresponding set does not necessarily denote a proper subset of corresponding set, but subset and corresponding set may be equal.

Conjunctive language, such as phrases of form "at least one of A, B, and C," or "at least one of A, B and C," unless specifically stated otherwise or otherwise clearly contradicted by context, is otherwise understood with context as used in general to present that an item, term, etc., may be either A or B or C, or any nonempty subset of set of A and B and C. For instance, in illustrative example of a set having three members, conjunctive phrases "at least one of A, B, and C" and "at least one of A, B and C" refer to any of following sets: {A}, {B}, {C}, {A, B}, {A, C}, {B, C}, {A, B, C}. Thus, such conjunctive language is not generally intended to imply that certain embodiments require at least one of A, at least one of B and at least one of C each to be present. In addition, unless otherwise noted or contradicted by context, term "plurality" indicates a state of being plural (e.g., "a plurality of items" indicates multiple items). In at least one embodiment, number of items in a plurality is at least two, but can be more when so indicated either explicitly or by context. Further, unless stated otherwise or otherwise clear from context, phrase "based on" means "based at least in part on" and not "based solely on."

Operations of processes described herein can be performed in any suitable order unless otherwise indicated herein or otherwise clearly contradicted by context. In at least one embodiment, a process such as those processes described herein (or variations and/or combinations thereof) is performed under control of one or more computer systems configured with executable instructions and is implemented as code (e.g., executable instructions, one or more computer programs or one or more applications) executing collectively on one or more processors, by hardware or combinations thereof. In at least one embodiment, code is stored on a computer-readable storage medium, for example, in form of a computer program comprising a plurality of instructions executable by one or more processors. In at least one embodiment, a computer-readable storage medium is a non-transitory computer-readable storage medium that excludes transitory signals (e.g., a propagating transient electric or electromagnetic transmission) but includes non-transitory data storage circuitry (e.g., buffers, cache, and queues) within transceivers of transitory signals. In at least one embodiment, code (e.g., executable code or source code) is stored on a set of one or more non-transitory computer-readable storage media having stored thereon executable instructions (or other memory to store executable instructions) that, when executed (i.e., as a result of being executed) by one or more processors of a computer system, cause computer system to perform operations described herein. In at least one embodiment, set of non-transitory computer-readable storage media comprises multiple non-transitory computer-readable storage media and one or more of individual non-transitory storage media of multiple non-transitory computer-readable storage media lack all of code while multiple non-transitory computer-readable storage media collectively store all of code. In at least one embodiment, executable instructions are executed such that different instructions are executed by different processors - for example, a non-transitory computer-readable storage medium store instructions and a main central processing unit ("CPU") executes some of instructions while a graphics processing unit ("GPU") executes other instructions. In at least one embodiment, different components of a computer system have separate processors and different processors execute different subsets of instructions.

In at least one embodiment, an arithmetic logic unit is a set of combinational logic circuitry that takes one or more inputs to produce a result. In at least one embodiment, an arithmetic logic unit is used by a processor to implement mathematical operation such as addition, subtraction, or multiplication. In at least one embodiment, an arithmetic logic unit is used to implement logical operations such as logical AND/OR or XOR. In at least one embodiment, an arithmetic logic unit is stateless, and made from physical switching components such as semiconductor transistors arranged to form logical gates. In at least one embodiment, an arithmetic logic unit may operate internally as a stateful logic circuit with an associated clock. In at least one embodiment, an arithmetic logic unit may be constructed as an asynchronous logic circuit with an internal state not maintained in an associated register set. In at least one embodiment, an arithmetic logic unit is used by a processor to combine operands stored in one or more registers of the processor and produce an output that can be stored by the processor in another register or a memory location.

In at least one embodiment, as a result of processing an instruction retrieved by the processor, the processor presents one or more inputs or operands to an arithmetic logic unit, causing the arithmetic logic unit to produce a result based at least in part on an instruction code provided to inputs of the arithmetic logic unit. In at least one embodiment, the instruction codes provided by the processor to the ALU are based at least in part on the instruction executed by the processor. In at least one embodiment combinational logic in the ALU processes the inputs and produces an output which is placed on a bus within the processor. In at least one embodiment, the processor selects a destination register, memory location, output device, or output storage location on the output bus so that clocking the processor causes the results produced by the ALU to be sent to the desired location.

In the scope of this application, the term arithmetic logic unit, or ALU, is used to refer to any computational logic circuit that processes operands to produce a result. For example, in the present document, the term ALU can refer to a floating point unit, a DSP, a tensor core, a shader core, a coprocessor, or a CPU.

In at least one embodiment, one or more components of systems and/or processors disclosed above can communicate with one or more CPUs, ASICs, GPUs, FPGAs, or other hardware, circuitry, or integrated circuit components that include, e.g., an upscaler or upsampler to upscale an image, an image blender or image blender component to blend, mix, or add images together, a sampler to sample an image (e.g., as part of a DSP), a neural network circuit that is configured to perform an upscaler to upscale an image (e.g., from a low resolution image to a high resolution image), or other hardware to modify or generate an image, frame, or video to adjust its resolution, size, or pixels; one or more components of systems and/or processors disclosed above can use components described in this disclosure to perform methods, operations, or instructions that generate or modify an image.

Accordingly, in at least one embodiment, computer systems are configured to implement one or more services that singly or collectively perform operations of processes described herein and such computer systems are configured with applicable hardware and/or software that enable performance of operations. Further, a computer system that implements at least one embodiment of present disclosure is a single device and, in another embodiment, is a distributed computer system comprising multiple devices that operate differently such that distributed computer system performs operations described herein and such that a single device does not perform all operations.

Use of any and all examples, or exemplary language (e.g., "such as") provided herein, is intended merely to better illuminate embodiments of disclosure and does not pose a limitation on scope of disclosure unless otherwise claimed. No language in specification should be construed as indicating any non-claimed element as essential to practice of disclosure.

All references, including publications, patent applications, and patents, cited herein are hereby incorporated by reference to same extent as if each reference were individually and specifically indicated to be incorporated by reference and were set forth in its entirety herein.

In description and claims, terms "coupled" and "connected," along with their derivatives, may be used. It should be understood that these terms may be not intended as synonyms for each other. Rather, in particular examples, "connected" or "coupled" may be used to indicate that two or more elements are in direct or indirect physical or electrical contact with each other. "Coupled" may also mean that two or more elements are not in direct contact with each other, but yet still cooperate or interact with each other.

Unless specifically stated otherwise, it may be appreciated that throughout specification terms such as "processing," "computing," "calculating," "determining," or like, refer to action and/or processes of a computer or computing system, or similar electronic computing device, that manipulate and/or transform data represented as physical, such as electronic, quantities within computing system's registers and/or memories into other data similarly represented as physical quantities within computing system's memories, registers or other such information storage, transmission or display devices.

In a similar manner, term "processor" may refer to any device or portion of a device that processes electronic data from registers and/or memory and transform that electronic data into other electronic data that may be stored in registers and/or memory. As non-limiting examples, "processor" may be a CPU or a GPU. A "computing platform" may comprise one or more processors. As used herein, "software" processes may include, for example, software and/or hardware entities that perform work over time, such as tasks, threads, and intelligent agents. Also, each process may refer to multiple processes, for carrying out instructions in sequence or in parallel, continuously or intermittently. In at least one embodiment, terms "system" and "method" are used herein interchangeably insofar as system may embody one or more methods and methods may be considered a system.

In present document, references may be made to obtaining, acquiring, receiving, or inputting analog or digital data into a subsystem, computer system, or computer-implemented machine. In at least one embodiment, process of obtaining, acquiring, receiving, or inputting analog and digital data can be accomplished in a variety of ways such as by receiving data as a parameter of a function call or a call to an application programming interface. In at least one embodiment, processes of obtaining, acquiring, receiving, or inputting analog or digital data can be accomplished by transferring data via a serial or parallel interface. In at least one embodiment, processes of obtaining, acquiring, receiving, or inputting analog or digital data can be accomplished by transferring data via a computer network from providing entity to acquiring entity. In at least one embodiment, references may also be made to providing, outputting, transmitting, sending, or presenting analog or digital data. In various examples, processes of providing, outputting, transmitting, sending, or presenting analog or digital data can be accomplished by transferring data as an input or output parameter of a function call, a parameter of an application programming interface or interprocess communication mechanism.

Although descriptions herein set forth example implementations of described techniques, other architectures may be used to implement described functionality, and are intended to be within scope of this disclosure. Furthermore, although specific distributions of responsibilities may be defined above for purposes of description, various functions and responsibilities might be distributed and divided in different ways, depending on circumstances.

Furthermore, although subject matter has been described in language specific to structural features and/or methodological acts, it is to be understood that subject matter claimed in appended claims is not necessarily limited to specific features or acts described. Rather, specific features and acts are disclosed as exemplary forms of implementing the claims.

It will be understood that aspects and embodiments are described above purely by way of example, and that modifications of detail can be made within the scope of the claims.

Each apparatus, method, and feature disclosed in the description, and (where appropriate) the claims and drawings may be provided independently or in any appropriate combination.

Reference numerals appearing in the claims are by way of illustration only and shall have no limiting effect on the scope of the claims.

## Claims

1. A processor comprising:
one or more circuits to at least:
divide a plurality of nodes of a graph representing a network into a plurality of subsets comprising a first subset;
use a portion of the plurality of subsets not including the first subset to train a prediction model to predict connections between pairs of nodes in the first subset;
use the trained model to generate a prediction of the connections between the pairs of nodes in the first subset; and
use the prediction to identify a set of anomalies in the network.

2. The processor of claim 1, wherein the set of anomalies comprise at least one missing connection between one of the pairs of nodes in the first subset.

3. The processor of claim 1 or 2, wherein the set of anomalies comprise at least one unnecessary connection between one of the pairs of nodes in the first subset.

4. The processor of claim 1, 2, or 3, wherein features of a portion of the plurality of nodes included in the portion of the plurality of subsets not including the first subset are utilized to train the prediction model.

5. The processor of claim 4, wherein the features of the portion of the plurality of nodes comprise: node connections included in the portion of the plurality of subsets not including the first subset; a name of each node in the portion of the plurality of nodes included in the portion of the plurality of subsets not including the first subset; and/or semantic information related to the portion of the plurality of nodes included in the portion of the plurality of subsets not including the first subset.

6. The processor of any preceding claim, wherein one or more circuits are to:
divide the plurality of nodes into a plurality of new subsets comprising a second subset,
train a new model using a portion of the plurality of new subsets not including the second subset,
use the trained new model to generate a new prediction of connections between pairs of nodes in the second subset, and
use the new prediction to identify a new set of anomalies in the network.

7. The processor of any preceding claim, wherein one or more circuits are to:
repeat at least until a set of criteria is satisfied:
updating the graph to correct at least one of the set of anomalies,
dividing the plurality of nodes of the updated graph into a plurality of new subsets comprising a second subset,
training a new model using a portion of the plurality of new subsets not including the second subset,
using the trained new model to generate a new prediction of connections between pairs of nodes in the second subset, and
using the new prediction to reidentify the set of anomalies in the network.

8. The processor of any preceding claim, wherein one or more circuits are to at least:
repeat, at least until a set of criteria is satisfied:
causing the network to be modified based at least in part on the set of anomalies,
obtaining an updated graph representing the modified network,
dividing a plurality of nodes of the updated graph into a plurality of new subsets comprising a second subset,
training a new model using a portion of the plurality of new subsets not including the second subset,
using the trained new model to generate a new prediction of connections between pairs of nodes in the second subset, and
using the new prediction to reidentify the set of anomalies in the modified network.

9. A data center comprising:
a plurality of network devices interconnected by a plurality of communication links to form a data center network; and
a processor having one or more circuits to at least:
divide a plurality of nodes of a graph representing the data center network into a plurality of subsets comprising a first subset;
use a portion of the plurality of subsets not including the first subset to train a prediction model to predict connections between pairs of nodes in the first subset;
use the trained model to generate a prediction of the connections between the pairs of nodes in the first subset; and
use the prediction to identify a set of anomalies in the first subset.

10. The data center of claim 9, wherein one or more circuits are to:
divide a plurality of nodes into a plurality of new subsets comprising a second subset that does not include any nodes in the first subset;
train a new model using a portion of the plurality of new subsets not including the second subset,
use the trained new model to generate a new prediction of connections between pairs of nodes in the second subset,
use the new prediction to identify a new set of anomalies in the second subset; and
repeat, at least until a trained new model has generated a new prediction of connections between all pairs of nodes in the data center network.

11. The data center of claim 9 or 10, wherein features of the plurality of nodes included in the portion of the plurality of subsets not including the first subset are utilized to train the prediction model, wherein the features of the plurality of nodes comprises at least one of a set of features comprising node connections within the portion of the plurality of subsets not including the first subset, a name of a portion of the plurality of nodes included in the portion of the plurality of subsets not including the first subset, and semantic information related to the portion of the plurality of nodes included in the portion of the plurality of subsets not including the first subset.

12. A method comprising:
obtaining a plurality of subsets, each subset in the plurality of subsets comprising a portion of a plurality of nodes of a graph representing a network; and
performing at least one iteration until a set of criteria is satisfied, each iteration comprising:
training a model using a portion of the plurality of subsets not including a particular subset,
using the trained model to generate predictions of connections between pairs of nodes in the particular subset,
using the predictions to identify a set of anomalies in the network,
obtaining an updated graph based at least in part on the set of anomalies, and
obtaining the plurality of subsets based at least in part on the updated graph.

13. The method of claim 12, wherein, within each iteration, the set of anomalies comprise at least one of a missing connection between one of the pairs of nodes in the particular subset or an unnecessary connection between one of the pairs of nodes in the particular subset.

14. The method of claim 12 or 13, wherein performing one or more of the at least one iteration further comprises correcting at least one of the set of anomalies in the network, and
the updated graph is obtained based at least in part on the network after the at least one anomaly has been corrected.

15. The method of claim 12, 13, or 14, wherein features of the plurality of nodes represented by the graph of the plurality of subsets not including the particular subset are utilized to train the model, wherein the features of the plurality of nodes comprises at least one of a set of features comprising node connections represented by the graph of the plurality of subsets not including the particular subset, a name of the nodes represented by the graph of the plurality of subsets not including the particular subset, and semantic information related to the nodes represented by the graph of the plurality of subsets not including the particular subset.
